# EUROPÄISCHE PATENTSCHRIFT

(11) **EP 3 710 414 B1**
(45) Veröffentlichungstag und Bekanntmachung des Hinweises auf die Patenterteilung: **07.04.2021**
(21) Anmeldenummer: 18796402.8
(22) Anmeldetag: 26.10.2018
(51) Int. Cl.: C04B 26/32, C08L 83/04, C08K 3/36

(54) **HÄRTBARE ORGANOPOLYSILOXANZUSAMMENSETZUNGEN**
CURABLE ORGANOPOLYSILOXANE COMPOSITIONS
COMPOSITIONS D'ORGANOPOLYSILOXANES DURCISSABLES

(43) Veröffentlichungstag der Anmeldung: 23.09.2020
(73) Patentinhaber: Wacker Chemie AG, 81737 München (DE)
(72) Erfinder: OSTENDORF, Detlev, 01129 Dresden (DE); DÖRRICH, Steffen, 81827 München (DE); PRASSE, Marko, 01612 Glaubitz (DE)
(74) Vertreter: Budczinski, Angelika
(86) Internationale Anmeldenummer: PCT/EP2018/079419
(87) Internationale Veröffentlichungsnummer: WO 2020/083506

(56) Entgegenhaltungen:
- WO-A1-2015/028296
- US-A1- 2016 207 832

## Beschreibung

Die vorliegende Erfindung betrifft härtbare Organopolysiloxanzusammensetzungen, die Siliconharze mit mindestens einer aliphatischen Kohlenstoff-Kohlenstoff-Mehrfachbindung, Verbindungen mit aliphatischen Kohlenstoff-Kohlenstoff-Doppelbindungen sowie Amine enthalten, deren Herstellung sowie deren Verwendung.

Mischungen von Polyorganosiloxanen mit zur Radikalreaktion befähigten SiC-gebundenen Alkenylgruppen und Füllstoffen sind bereits bekannt. In WO 2015/028296 werden beispielsweise Zusammensetzungen zur Herstellung von künstlichen Steinen beschrieben, die als Bindemittel u.a. radikalisch vernetzende Organosiliciumverbindungen mit polymerisierbaren aliphatischen Kohlenstoff-Kohlenstoff-Doppelbindungen enthalten können.

Mischungen aus Organopolysiloxanharzen, welche polymerisierbare aliphatische Kohlenstoff-Kohlenstoff-Doppelbindungen aufweisen, und Acrylaten oder Methacrylaten als Reaktivweichmacher, für den Einsatz als Bindemittel in künstlichen Steinen wurden bislang nicht beschrieben. Allerdings haben Zusammensetzungen aus Organopolysiloxanharzen, Acrylaten oder Methacrylaten und Füllstoffen den Nachteil, dass sie ein strukturviskoses Fließverhalten zeigen, d.h. eine hohe Viskosität bei niedrigen Scherraten und umgekehrt, und dass mit zunehmendem Füllgrad die Anfangsviskosität stark ansteigt, sodass solche Mischungen bei niedrigen Scherraten schlechter verarbeitbar sind.

Gegenstand der Erfindung sind Zusammensetzungen enthaltend
(A) Organopolysiloxanharze bestehend aus Einheiten der allgemeinen Formel

   RₐR¹_{b}(OR²)_{c}SiO_{(4-a-b-c)/2} (I) ,

   wobei
   R gleich oder verschieden sein kann und Wasserstoffatom oder einwertige, SiC-gebundene, gegebenenfalls substituierte, von aliphatischen Kohlenstoff-Kohlenstoff-Mehrfachbindungen freie Kohlenwasserstoffreste, darstellt,
   R¹ gleich oder verschieden sein kann und einwertige, SiC-gebundene, gegebenenfalls substituierte Kohlenwasserstoffreste mit aliphatischen Kohlenstoff-Kohlenstoff-Mehrfachbindungen, bedeutet,
   R² gleich oder verschieden sein kann und Wasserstoffatom oder einwertige, gegebenenfalls substituierte Kohlenwasserstoffreste, bedeutet,
   a 0, 1, 2 oder 3 ist,
   b 0 oder 1 ist und
   c 0, 1, 2 oder 3 ist,
   mit der Maßgabe dass in Formel (I) die Summe a+b+c<3 ist, in mindestens einer Einheit der Formel (I) b=1 ist, in mindestens 50%, bevorzugt mindestens 60%, besonders bevorzugt mindestens 80%, insbesondere mindestens 90%, der Einheiten der Formel (I) a+b=1 ist sowie in höchstens 10%, bevorzugt höchstens 8%, besonders bevorzugt höchstens 6%, der Einheiten der Formel (I) a+b=3 ist, jeweils bezogen auf alle Siloxaneinheiten der Formel (I) in Organopolysiloxanharz (A),
(B) organische Verbindungen mit mindestens einer Einheit der Formel

   CR³₂=CR³-CO-Z- (II),

   wobei
   R³ gleich oder verschieden sein kann und Wasserstoffatom, Cyanorest -CN oder einen einwertigen, gegebenenfalls substituierten Kohlenwasserstoffrest, der durch Heteroatome unterbrochen sein kann, bedeutet,
   Z gleich oder verschieden sein kann und -O- oder -NR⁵- bedeutet und
   R⁵ gleich oder verschieden sein kann und Wasserstoffatom oder einen einwertigen, gegebenenfalls substituierten Kohlenwasserstoffrest, der durch Heteroatome unterbrochen sein kann, bedeutet,
(C) Initiatoren,
(D) Füllstoffe und
(K) Amine.

Beispiele für einwertige, SiC-gebundene Kohlenwasserstoffreste R sind Alkylreste, wie der Methyl-, Ethyl-, n-Propyl-, iso-Propyl-, 1-n-Butyl-, 2-n-Butyl-, iso-Butyl-, tert-Butyl-, n-Pentyl-, iso-Pentyl-, neo-Pentyl-, tert-Pentylrest; Hexylreste, wie der n-Hexylrest; Heptylreste, wie der n-Heptylrest; Octylreste, wie der n-Octylrest und iso-Octylreste, wie der 2,4,4-Trimethylpentyl- und der 2,2,4-Trimethylpentylrest; Nonylreste, wie der n-Nonylrest; Decylreste, wie der n-Decylrest; Dodecylreste, wie der n-Dodecylrest; Hexadecylreste, wie der n-Hexadecylrest; Octadecylreste, wie der n-Octadecylrest; Cycloalkylreste, wie der Cyclopentyl-, Cyclohexyl-, Cycloheptylrest und Methylcyclohexylreste; Arylreste, wie der Phenyl-, Biphenylyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für einwertige, SiC-gebundene, substituierte Kohlenwasserstoffreste R sind 3-(O-Methyl-N-carbamato)-propyl-, O-Methyl-N-carbamato-methyl-, 3-Glycidoxypropyl-, Isocyanatomethyl-, 3-Isocyanatopropyl-, Bernsteinsäureanhydrid-, 2-(3,4-Epoxycyclohexyl)ethyl-, 3-Mercaptopropyl- und der 3-Chlorpropylrest.

Bevorzugt handelt es sich bei Rest R um einwertige, SiC-gebundene, von aliphatischen Kohlenstoff-Kohlenstoff-Mehrfachbindungen freie Kohlenwasserstoffreste mit 1 bis 18 Kohlenstoffatomen, besonders bevorzugt um Alkyl- oder Arylreste mit 1 bis 8 Kohlenstoffatomen, insbesondere um den Methylrest.

Beispiele für einwertige, SiC-gebundene, gegebenenfalls substituierte, aliphatische Kohlenstoff-Kohlenstoff-Mehrfachbindungen aufweisende Reste R¹ sind Vinyl-, 1-Propenyl-, 2-Propenyl, n-5-Hexenyl-, 2-(3-Cyclohexenyl)ethyl-, 7-Octenyl-, 10-Undecenyl-, 4-Vinylcyclohexyl-, 3-Norbornenyl-, 2-Bornenyl-, 4-Vinylphenyl-, Methacryloxymethyl-, Acryloxyethyl-, Methacryloxyethyl-, Acryloxymethyl-, 3-Methacryloxypropyl- und der 3-Acryloxypropylrest.

Bevorzugt handelt es sich bei Rest R¹ um einwertige, SiC-gebundene, gegebenenfalls mit Acryloxy-, Methacryloxy-, Allyloxy- oder Vinyloxyresten substituierte, aliphatische Kohlenstoff-Kohlenstoff-Doppelbindungen aufweisende Kohlenwasserstoffreste mit 1 bis 18 Kohlenstoffatomen, besonders bevorzugt um den Vinyl-, Methacryloxymethyl-, Acryloxymethyl-, 3-Methacryloxypropyl- oder 3-Acryloxypropylrest, insbesondere um den Vinyl- oder den 3-Methacryloxypropylrest, ganz besonders bevorzugt um den Vinylrest.

Die erfindungsgemäßen Organopolysiloxanharze (A) können nur eine Art von Rest R¹ aufweisen oder zwei oder mehrere unterschiedliche Reste R¹, wobei bevorzugt die Summe der Einheiten der Formel (I) mit R¹ = Vinylrest mindestens 80%, besonders bevorzugt mindestens 90%, insbesondere mindestens 95%, bezogen auf alle Einheiten der Formel (I) mit b=1, beträgt.

Beispiele für Rest R² sind die für Rest R und R¹ genannten Reste.

Bevorzugt handelt es sich bei Rest R² um Wasserstoffatom oder einwertige Kohlenwasserstoffreste mit 1 bis 18 Kohlenstoffatomen, besonders bevorzugt um Wasserstoffatom, den Methyl-, Ethyl-, n-Propyl-, iso-Propyl-, n-Butyl-, sec-Butyl-, tert-Butyl- oder iso-Butylrest, insbesondere um Wasserstoffatom, den Methyl- oder den Ethylrest.

Im erfindungsgemäß eingesetzten Harz (A) beträgt die Summe der Einheiten der Formel (I) mit b=1 bevorzugt 10% bis 40%, besonders bevorzugt 15% bis 35%, insbesondere 15% bis 30%.

Im erfindungsgemäß eingesetzten Harz (A) beträgt die Summe der Einheiten der Formel (I) mit a+b=2 vorzugsweise höchstens 30%, bevorzugt höchstens 20%, besonders bevorzugt höchstens 10%, insbesondere höchstens 5%, jeweils bezogen auf die Summe aller Siloxaneinheiten der Formel (I).

Im erfindungsgemäß eingesetzten Harz (A) beträgt die Summe der Einheiten der Formel (I) mit c≠0 vorzugsweise 5% bis 55%, bevozugt 15% bis 50%, besonders bevorzugt 25% bis 45%, insbesondere 30% bis 40%, jeweils bezogen auf die Summe aller Siloxaneinheiten der Formel (I).

Die erfindungsgemäß eingesetzten Harze (A) bestehen bevorzugt aus durchschnittlich mindestens 12, besonders bevorzugt aus durchschnittlich mindestens 15, insbesondere aus durchschnittlich mindestens 18, ganz besonders bevorzugt aus durchschnittlich 18 bis 50, Einheiten der Formel (I).

In Organopolysiloxanharz (A) liegen die Einheiten der Formel (I) bevorzugt statistisch verteilt vor.

Bevorzugte Beispiele für Organopolysiloxanharze (A) sind durch Cohydrolyse von Tetraethoxysilan, Organyl-triethoxysilanen, Diorganyl-diethoxysilanen und/oder Triorganyl-ethoxysilanen mit Wasser erhältliche Verbindungen (A), welche bevorzugt durchschnittlich mindestens 12, besonders bevorzugt durchschnittlich mindestens 15, insbesondere durchschnittlich mindestens 18, Siliciumatome pro Molekül aufweisen. Statt der oben genannten Ethoxysilane können auch die entsprechenden Methoxysilane zur Herstellung verwendet werden, wobei dann Organylmethoxypolysiloxane erhältlich sind. Es können aber auch Gemische von Ethoxy- und Methoxysilanen eingesetzt werden, wobei dann Organylmethoxyethoxypolysiloxanharze erhältlich sind. Nach der Cohydrolyse wird das Reaktionsgemisch vorzugsweise neutralisiert, z.B. mit einer Alkalihydroxid- oder Alkalialkoholat-Lösung, und flüchtige Komponenten, wie Restwasser, Alkohol sowie Silane oder flüchtige Siloxane, abdestilliert. Bevorzugt wird das Reaktionsgemisch nach der Cohydrolyse oder nach der destillativen Aufarbeitung, besonders bevorzugt nach der Cohydrolyse, neutralisiert, sodass insbesondere der Restsäuregehalt in Organopolysiloxanharz (A) 0 bis 30 ppm beträgt.

Bevorzugte Beispiele für derartige erfindungsgemäß eingesetzte Organopolysiloxanharze (A) sind
(MeSiO_{3/2})₀,₄₈(ViSiO_{3/2})_{0,12}(Me(MeO)SiiO_{2/2})_{0,26}(Vi(MeO)SiO_{2/2})_{0,07} (Me(HO)SiO_{2/2})_{0,02}(Me₂SiO_{2/2})_{0,01}(Me(MeO)₂SiO_{1/2})_{0,01}(Me₃SiO_{1/2})_{0,03} mit einer Zahlenmittel-Molmasse Mn von 1860 g/mol und einer Gewichtsmittel-Molmasse Mw von 4860 g/mol,
(MeSiO_{3/2})_{0,36}(ViSiO_{3/2})_{0,09}(Me(MeO)SiO_{2/2})_{0,39}(Vi(MeO)SiO_{2/2})_{0,10} (Me(HO)SiO_{2/2})_{0,02}(Me₂SiO_{2/2})_{0,01}(Me(MeO)₂SiO_{1/2})_{0,03} mit einer Zahlenmittel-Molmasse Mn von 1680 g/mol und einer Gewichtsmittel-Molmasse Mw von 4340 g/mol,
(MeSiO_{3/2})_{0,40}(ViSiO_{3/2})_{0,10}(Me(MeO)SiO_{2/2})_{0,34}(Vi(MeO)SiO_{2/2})_{0,08} (Me(HO)SiO_{2/2})_{0,02}(Me₂SiO_{2/2})_{0,01}(Me(MeO)₂SiO_{1/2})_{0,02}(Me₃SiO_{1/2})_{0,03} mit einer Zahlenmittel-Molmasse Mn von 1640 g/mol und einer Gewichtsmittel-Molmasse Mw von 4080 g/mol,
(MeSiO_{3/2})_{0,44}(MaSiO_{3/2})_{0,11}(Me(MeO)SiO_{2/2})_{0,28}(Ma(MeO)SiO_{2/2})_{0,07} (Me(HO)SiO_{2/2})_{0,02}(Ma(HO)SiO_{2/2})_{0,01}(Me₂SiO_{2/2})_{0,01}(Me(MeO)₂SiO_{1/2})_{0,03} (Me₃SiO_{1/2})_{0,03} mit einer Zahlenmittel-Molmasse Mn von 1710 g/mol und einer Gewichtsmittel-Molmasse Mw von 4700 g/mol,
(MeSiO_{3/2})_{0,48}(ViSiO_{3/2})_{0,12}(Me(MeO)SiO_{2/2})_{0,26}(Vi(MeO)SiO_{2/2})_{0,07} (Me(HO)SiO_{2/2})_{0,02}(Me₂SiO_{2/2})_{0,03}(Me(MeO)₂SiO_{1/2})_{0,01}(Me₂(OH)SiO_{1/2})_{0,01} mit einer Zahlenmittel-Molmasse Mn von 1710 g/mol und einer Gewichtsmittel-Molmasse Mw von 4700 g/mol,
(MeSiO_{3/2})_{0,48} (ViSiO_{3/2})_{0,12} (IoSiO_{3/2})_{0,01} (Me (MeO) SiO_{2/2})_{0,26} (Vi(MeO)SiO_{2/2})_{0,07} (Me(HO)SiO_{2/2})_{0,02} (Io(HO)SiO_{2/2})_{0,01} (Me₂SiO_{2/2})_{0,01} (Me(MeO)₂SiO_{1/2})_{0,01} (Io(OH)₂SiO_{1/2})_{0,01} mit einer Zahlenmittel-Molmasse Mn von 1540 g/mol und einer Gewichtsmittel-Molmasse Mw von 3630 g/mol,
(MeSiO_{3/2})_{0,25}(ViSiO_{3/2})_{0,10}(PhSiO_{3/2})_{0,15}(Me(MeO)SiO_{2/2})_{0,21} (Vi(MeO)SiO_{2/2})_{0,09}(Ph(MeO)SiO_{2/2})_{0,11}(Me(HO)SiO_{2/2})_{0,01} (Ph(HO)SiO_{2/2})_{0,02}(Me₂SiO_{2/2})_{0,01}(Me(MeO)₂SiO_{1/2})_{0,01} (Ph(OH)(MeO)SiO_{1/2})_{0,01}(Me₃SiO_{1/2})_{0,03} mit einer Zahlenmittel-Molmasse Mn von 1040 g/mol und einer Gewichtsmittel-Molmasse Mw von 1590 g/mol,
(MeSiO_{3/2})_{0,46} (ViSiO_{3/2})_{0,11} (Me(EtO)SiO_{2/2})_{0,28} (Vi(EtO)SiO_{2/2})_{0,08} (Me(HO)SiO_{2/2})_{0,02} (Me₂SiO_{2/2})_{0,01} (Me(EtO)₂SiO_{1/2})_{0,01} (Me₃SiO_{1/2})_{0,03} mit einer Zahlenmittel-Molmasse Mn von 1610 g/mol und einer Gewichtsmittel-Molmasse Mw von 3690 g/mol,
(MeSiO_{3/2})_{0,29}(ViSiO_{3/2})_{0,22}(Me(MeO)SiO_{2/2})_{0,08}(Vi(MeO)SiO_{2/2})_{0,06} (Me(HO)SiO_{2/2})_{0,01}(Me₂SiO_{2/2})_{0,24}(Me(MeO)₂SiO_{1/2})_{0,01}(Me(MeO)SiO_{2/2})_{0,05} (Me₃SiO_{1/2})_{0,04} mit einer Zahlenmittel-Molmasse Mn von 2200 g/mol und einer Gewichtsmittel-Molmasse Mw von 6800 g/mol,
wobei Me den Methyl-, Vi den Vinyl-, Et den Ethyl-, Ph den Phenyl-, Ma den 3-Methacryloxypropyl- und Io den 2,4,4-Trimethylpentylrest bedeuten.

Die erfindungsgemäß eingesetzten Harze (A) können bei 23°C und 1000 hPa fest oder flüssig sein, wobei die Harze (A) bei 23°C und 1000 hPa bevorzugt flüssig sind.

Falls die erfindungsgemäß eingesetzten Harze (A) flüssig sind, haben sie eine dynamische Viskosität von bevorzugt mindestens 1000 mPa·s, besonders bevorzugt 1500 mPa·s bis 1000000 mPa·s, insbesondere 3000 mPa·s bis 100000 mPa·s, jeweils bei 23°C.

Im Rahmen der vorliegenden Erfindung wird die dynamische Viskosität nach DIN 53019 bei einer Temperatur, sofern nicht anders angegeben, von 23°C und einem Luftdruck von 1013 hPa bestimmt. Die Messung wird mit einem Rotationsrheometer "Physica MCR 300" von der Firma Anton Paar durchgeführt. Dabei wird für Viskositäten von 1 bis 200 mPa·s ein koaxiales Zylinder-Messsystem (CC 27) mit einem Ring-Messspalt von 1,13 mm genutzt, für Viskositäten von größer als 200 mPa·s ein Kegel-Platte-Messsystem (Searle-System mit Messkegel CP 50-1) verwendet. Die Schergeschwindigkeit wird der Polymerviskosität angepasst (1 bis 99 mPa·s bei 100 s⁻¹; 100 bis 999 mPa·s bei 200 s⁻¹; 1000 bis 2999 mPa·s bei 120 s⁻¹; 3000 bis 4999 mPa·s bei 80 s⁻¹; 5000 bis 9999 mPa·s bei 62 s⁻¹; 10000 bis 12499 mPa·s bei 50 s⁻¹; 12500 bis 15999 mPa·s bei 38,5 s⁻¹; 16000 bis 19999 mPa·s bei 33 s⁻¹; 20000 bis 24999 mPa·s bei 25 s⁻¹; 25000 bis 29999 mPa·s bei 20 s⁻¹; 30000 bis 39999 mPa·s bei 17 s⁻¹; 40000 bis 59999 mPa·s bei 10 s⁻¹; 60000 bis 149999 bei 5 s⁻¹; 150000 bis 199999 mPa·s bei 3,3 s⁻¹; 200000 bis 299999 mPa·s bei 2,5 s⁻¹; 300000 bis 1000000 mPa·s bei 1,5 s⁻¹.

Nach Temperierung des Messsystems auf die Messtemperatur wird ein dreistufiges Messprogramm bestehend aus einer Einlaufphase, einer Vorscherung und einer Viskositäts-Messung angewandt. Die Einlaufphase erfolgt durch stufenweise Erhöhung der Schergeschwindigkeit innerhalb einer Minute auf die oben angegebene von der zu erwartenden Viskosität abhängigen Schergeschwindigkeit, bei der die Messung erfolgen soll. Sobald diese erreicht ist, erfolgt bei konstanter Schergeschwindigkeit die Vorscherung für 30 s, anschließend werden zur Bestimmung der Viskosität 25 Einzelmessungen für je 4,8 s durchgeführt, aus denen der Mittelwert bestimmt wird. Der Mittelwert entspricht der dynamischen Viskosität, die in mPa·s angegeben wird.

Die erfindungsgemäß eingesetzten Harze (A) haben eine Zahlenmittel-Molmasse Mn von vorzugsweise 1000 bis 6000 g/mol, bevorzugt 1100 g/mol bis 5000 g/mol, besonders bevorzugt 1200 g/mol bis 4000 g/mol, insbesondere 1400 g/mol bis 3000 g/mol.

Im Rahmen der vorliegenden Erfindung werden die Zahlenmittel-Molmasse Mn und die Gewichtsmittel-Molmasse Mw, gerundet auf ganze 10er Zahlen entsprechend DIN 1333:1992-02 Abschnitt 4, mit Größenausschlusschromatographie (SEC/GPC)entsprechend DIN 55672-1/ISO 160414-1 sowie ISO 160414-3 bestimmt, indem ein Säulensatz basierend auf Polystyrol-co-Divinylbenzol als stationärer Phase aus drei Säulen unterschiedlicher Porengrößenverteilung der Reihenfolge nach 10000 Å, 500 Å und 100 Å mit einer Ausschlussgröße von größer als 450,000 g/mol gegen Polystyrol-Standards kalibriert wird. Phenyl-haltige Komponenten werden mit THF als Eluent bestimmt, nicht-phenyl-haltige mit Toluol als Eluent. Die Analysen werden bei einer Säulentemperatur von 40±1°C und mittels Brechungsindex-Detektor durchgeführt.

Bei den erfindungsgemäß eingesetzten Harzen (A) handelt es sich um handelsübliche Produkte bzw. sind sie nach in der Chemie gängigen Verfahren herstellbar.

Bei den erfindungsgemäß eingesetzten Verbindungen (B) handelt es sich bevorzugt um solche, die 5 bis 50 Kohlenstoffatome, besonders bevorzugt 6 bis 30 Kohlenstoffatome, insbesondere 6 bis 20 Kohlenstoffatome, aufweisen.

Bei den erfindungsgemäß eingesetzten Verbindungen (B) handelt es sich bevorzugt um organische Verbindungen mit mindestens einer Einheit der Formel (II), die frei von Silicium-Atomen sind.

Die erfindungsgemäß eingesetzten Verbindungen (B) sind bevorzugt bei Temperaturen unterhalb 60°C, besonders bevorzugt unterhalb 40°C, insbesondere unterhalb 30°C, jeweils bei einem Druck von 1000 hPa, flüssig.

Die erfindungsgemäß eingesetzten Verbindungen (B) haben einen Siedepunkt bei Temperaturen von bevorzugt mindestens 120°C, besonders bevorzugt bei Temperaturen von mindestens 150°C, insbesondere bei Temperaturen von mindestens 200°C, jeweils bei einem Druck von 1000 hPa.

Beispiele für Rest R³ sind die für R und R¹ genannten Reste sowie der Cyanorest.

Bevorzugt handelt es sich bei Rest R³ um Wasserstoffatom oder Methylrest.

Beispiele für Rest R⁵ sind die für R und R¹ genannten Reste.

Bevorzugt handelt es sich bei Rest R⁵ um Wasserstoffatom oder einwertige, aliphatisch gesättigte Kohlenwasserstoffreste, besonders bevorzugt um Wasserstoffatom oder den Methylrest.

Bevorzugt handelt es sich bei Rest Z um -O-.

Bevorzugt handelt es sich bei den Verbindungen (B) um von basischem Stickstoff freie organische Acrylate oder Methacrylate, besonders bevorzugt um von basischem Stickstoff freie organische Mono-, Di- oder Triacrylate oder organische Mono-, Di- oder Trimethacrylate, insbesondere um von basischem Stickstoff freie organische Mono- oder Diacrylate oder organische Mono- oder Dimethacrylate.

Beispiele für erfindungsgemäß eingesetzte Verbindungen (B) sind Tripropylenglycoldiacrylat (CAS: 42978-66-5), (1-Methylethyliden)bis(4,1-phenylenoxy-3,1-propandiyl)bismethacrylat (CAS: 27689-12-9), Tris(2-acryloyloxyethyl)isocyanurat (CAS: 40220-08-4), (5-Ethyl-1,3-dioxan-5-yl)methylacrylat (CAS: 66492-51-1), Tricyclo[5.2.1.0^{2,6}]decandimethanoldiacrylat (CAS: 42594-17-2), (Octahydro-4,7-methano-1H-indendiyl)bis(methylen)dimethacrylat (CAS: 43048-08-4), [2-(Acryloyloxy)ethyl]trimethylammoniumchlorid (CAS: 44992-01-0), [2-(Methacryloyloxy)ethyl]trimethylammoniumchlorid (CAS: 5039-78-1), 1,1,1-Trimethylolethantrimethacrylat (CAS: 24690-33-3), 1,1,1-Trimethylolethantriacrylat (CAS: 19778-85-9), 1,12-Dodecandioldimethacrylat (CAS: 72829-09-5), 1,2,5-Pentantrioltrimethacrylat (CAS: 287196-31-0), 1,3-Propandioldiacrylat (CAS: 24493-53-6), 1,3-Butandioldiacrylat (CAS: 19485-03-1), 1,3-Butandioldimethacrylat (CAS: 1189-08-8), 1,4-Butandioldiacrylat (CAS: 1070-70-8), 1,4-Butandioldimethacrylat (CAS: 2082-81-7), 1,6-Hexandioldiacrylat (CAS: 13048-33-4), 1,6-Hexandioldimethacrylat (CAS: 6606-59-3), 1,9-Nonandioldiacrylat (CAS: 107481-28-7), 1,9-Nonandioldimethacrylat (CAS: 65833-30-9), 1,10-Decandioldiacrylat (CAS: 13048-34-5), 1,10-Decandioldimethacrylat (CAS: 6701-13-9), 1,4-Cyclohexandioldimethacrylat (CAS: 38479-34-4), 1,4-Butandiylbis[oxy-(2-hydroxy-3,1-propanediyl)]diacrylat (CAS: 52408-42-1), 2-(1-(2-Hydroxy-3,5-di-tert-pentyl-phenyl)ethyl)-4,6-di-tert-pentylphenylacrylat (CAS: 123968-25-2), 2-(2-Oxo-1-imidazolidinyl)-ethylmethacrylat (CAS: 86261-90-7), 2-(2-Vinyloxyethoxy)ethylacrylat (CAS RN: 86273-46-3), 2-(Methacryloyloxy)ethylacetoacetat (CAS: 21282-97-3), 2,2-Dimethylpropanedioldimethacrylat (CAS: 1985-51-9), 2,3-Dihydroxypropylmethacrylat, 2,3-Epoxypropylmethacrylat, 2-[[2,2-Bis[[(1-oxoallyl)oxy]methyl]butoxy]methyl]-2-ethyl-1,3-propanediyldiacrylat (CAS: 94108-97-1), 2-[2-(2-ethoxyethoxy)ethoxy]ethylmethacrylat (CAS: 39670-09-2), 2-(2-Ethoxyethoxy)ethylacrylat, Hydroxyethylcaprolactonacrylat (CAS: 110489-05-9), Tricyclo[5.2.1.0^{2,6}]decandimethanoldiacrylat (CAS: 42594-17-2), Bisphenol A-ethoxylatdimethacrylat (CAS: 41637-38-1), Bisphenol A-epoxydiacrylat (CAS: 55818-57-0), 2-Allyloxyethoxyethylmethacrylat (CAS: 58985-94-7), 2-Ethoxyethylmethacrylat (CAS: 2370-63-0), Octocrilen (CAS: 6197-30-4), 2-Ethylhexylacrylat (CAS: 103-11-7), 2-Ethylhexylmethacrylat (CAS: 688-84-6), 2-Ethylhexyl-trans-4-methoxycinnamat (CAS: 83834-59-7), 2-Hydroxyethylacrylat, 2-Hydroxyethylmethacrylat, 2-Methoxyethylacrylat (CAS: 3121-61-7), 2-Methoxyethylmethacrylat, 2-n-Butoxyethylmethacrylat, 2-Octylcyanoacrylat, 2-Phenoxyethylacrylat (CAS: 48145-04-6), 2-Phenoxyethylmethacrylat, 2-Propylheptylacrylat (CAS: 149021-58-9), 2-Propylheptylmethacrylat, 3-(Acryloyloxy)-2-hydroxypropylmethacrylat (CAS: 1709-71-3), 3,4-Epoxycyclohexylmethylmethacrylat, 3-Hydroxy-2,2-dimethylpropyl-3-hydroxy-2,2-dimethylpropionat (CAS: 1115-20-4), 4-Hydroxybutylacrylat (CAS: 2478-10-6), 2-Acetoacetoxyethylmethacrylat (CAS: 21282-97-3), Allylmethacrylat, Benzyldimethyl[2-[(1-oxoallyl)oxy]ethyl]ammoniumchlorid, Benzylmethacrylat, Bisphenol A-dimethacrylat, Butyldiglycolmethacrylat, Cyclohexylmethacrylat (CAS: 101-43-9), Cyclohexylacrylat (CAS: 3066-71-5), Dicyclopentanylacrylat (CAS: 7398-56-3), Dicyclopentanylmethacrylat (CAS: 34759-34-7), Cyclopentylmethacrylat, Dicyclopentenyloxyethylmethacrylat (CAS: 68586-19-6), Diethylenglycoldimethacrylat (CAS: 2358-84-1), Diurethandimethacrylat, Mischung von Isomeren (CAS: 72869-86-4), Ethyl-2-cyano-3-ethoxyacrylat (CAS: 94-05-3), Ethyl-2-cyanoacrylat (CAS: 7085-85-0), Ethyl-3-benzoylacrylat, Ethyldiglycolmethacrylat, Ethylenglycoldimethacrylat (CAS: 97-90-5), Ethylacrylat, Ethylmethacrylat, Ethyltriethylenglycolmethacrylat, Furfurylmethacrylat, Glyceroldimethacrylat, Hexadecylacrylat, Hexadecylmethacrylat (CAS: 2495-27-4), Hexahydro-4,7-methano-1H-indenylacrylat (CAS 12542-30-2), Hydroxybutylmethacrylat (CAS: 29008-35-3), Hydroxypropylacrylat (CAS: 25584-83-2), Hydroxypropylmethacrylat, Isomerengemisch (CAS: 27813-02-1), 2-Hydroxypropylmethacrylat (CAS: 923-26-2), 3-Hydroxypropylmethacrylat (CAS: 2761-09-3), Isobornylacrylat (CAS: 5888-33-5), Isobornylmethacrylat (CAS: 7534-94-3), Isodecylacrylat, Isodecylmethacrylat, Isooctylacrylat (CAS: 29590-42-9), Isooctylmethacrylat (CAS: 29590-42-9), Isopentylmethacrylat, Isotridecylmethacrylat, Methacrylsäure-(3-methylbut-2-yl)ester, Methacrylsäureanhydrid (CAS: 760-93-0), Methylcinnamat (CAS: 103-26-4), Methylmethacrylat, Neopentylglycolpropoxyliertes Diacrylat (CAS: 84170-74-1), Neopentylglykoldimethacrylat (CAS: 1985-51-9), n-Butylacrylat, n-Butylmethacrylat (CAS: 97-88-1), n-Decylacrylat, n-Decylmethacrylat, n-Dodecylacrylat, n-Dodecylmethacrylat (CAS: 142-90-5), n-Hexylacrylat, n-Hexylmethacrylat, n-Octadecylacrylat, n-Octadecylmethacrylat, 2-Norbornylacrylat (CAS: 10027-06-2), Dipropylenglycoldiacrylat (CAS: 57472-68-1), 2-Ethylhexyl-2-cyano-3,3-diphenylacrylat (CAS: 6197-30-4), Phenylmethacrylat-Polyetherpolytetraacrylat (CAS: 51728-26-8), Polyethylenglycoldimethacrylat, Poly(propylenglycol)diacrylat (CAS: 52496-08-9), Poly(propylenglycol)dimethacrylat (CAS: 25852-49-7), p-Vinylbenzylmethacrylat, sec-Butylacrylat, sec-Butylmethacrylat, epoxidiertes Sojabohnenöl-acrylat (CAS: 91722-14-4), tert-Butylacrylat, tert-Butylmethacrylat, Tetradecylacrylat, Tetradecylmethacrylat, Tetrahydrofurfurylmethacrylat, Tridecylacrylat, Tridecylmethacrylat, Triethylenglycoldimethacrylat (CAS: 109-16-0), Trimethylolpropanethoxylat-triacrylat (CAS: 28961-43-5), Trimethylolpropantriacrylat (CAS: 15625-89-5), Trimethylolpropantrimethacrylat (CAS: 3290-92-4), Tritylmethacrylat, Vinyl-4-methacryloxybutylether, N-tert-Butylacrylamid, N-(Hydroxymethyl)methacrylamid, N,N-Dimethylacrylamid (CAS: 2680-03-7), N-(1,1,3,3-Tetramethylbutyl)-acrylamid (CAS: 4223-03-4), N-(1,1-Dimethyl-3-oxobutyl)acrylamid (CAS: 2873-97-4), N-(Hydroxymethyl)acrylamid (CAS: 924-42-5), N-Isopropylmethacrylamid (CAS: 13749-61-6), N,N-Diethyl-acrylamid (CAS: 2675-94-7), N,N-Diethylmethacrylamid (CAS: 5441-99-6), N-Methylolmethacrylamid, N-tert-Butylmethacrylamid, N-tert-Butylacrylamid, N-2-Hydroxyethylacrylamid (CAS: 7646-67-5), N-2-Hydroxyethylmethacrylamid, N,N'-Hexamethylenbis(methacrylamid) (CAS: 16069-15-1) und N-Dodecylacrylamid.

Bevorzugt handelt es sich bei erfindungsgemäß eingesetzten Verbindungen (B) um Triethylenglycoldimethacrylat (CAS: 109-16-0), Trimethylolpropantriacrylat (CAS: 15625-89-5), n-Butylmethacrylat (CAS: 97-88-1), n-Dodecylmethacrylat (CAS: 142-90-5), 2-Ethylhexylacrylat (CAS: 103-11-7), 2-Ethylhexylmethacrylat (CAS: 688-84-6), 2-Hydroxyethylacrylat (CAS: 818-61-1), 2-Hydroxyethylmethacrylat (CAS: 868-77-9), Hydroxypropylacrylat (CAS: 25584-83-2), Hydroxypropylmethacrylat, Isomerengemisch (CAS: 27813-02-1), 2-Hydroxypropylmethacrylat (CAS: 923-26-2), 3-Hydroxypropylmethacrylat (CAS: 2761-09-3), 2-Methoxyethylacrylat (CAS: 3121-61-7), Ethylenglycoldimethacrylat (CAS: 97-90-5), Isobornylacrylat (CAS: 5888-33-5), Isobornylmethacrylat (CAS: 7534-94-3), Glycerolpropoxytriacrylat (CAS: 52408-84-1), 1,4-Butandioldimethacrylat (CAS: 2082-81-7), 1,6-Hexandioldimethacrylat (CAS: 6606-59-3), 1,9-Nonandioldiacrylat (CAS: 107481-28-7), Dipropylenglycoldiacrylat (CAS: 57472-68-1), Poly(propylenglycol)diacrylat (CAS: 52496-08-9), Poly(propylenglycol)dimethacrylat (CAS: 25852-49-7), Tricyclo[5.2.1.0^{2,6}]decandimethanoldiacrylat (CAS: 42594-17-2), Dicyclopentanylacrylat (CAS: 7398-56-3), Dicyclopentanylmethacrylat (CAS: 34759-34-7), Cyclohexylmethacrylat (CAS: 101-43-9) oder Cyclohexylacrylat (CAS: 3066-71-5).

Besonders bevorzugt handelt es sich bei erfindungsgemäß eingesetzten Verbindungen (B) um n-Butylmethacrylat (CAS: 97-88-1), 2-Ethylhexylacrylat (CAS: 103-11-7), 2-Ethylhexylmethacrylat (CAS: 688-84-6), 2-Hydroxyethylmethacrylat (CAS: 868-77-9), Hydroxypropylmethacrylat, Isomerengemisch (CAS: 27813-02-1), 2-Hydroxypropylmethacrylat (CAS: 923-26-2), 3-Hydroxypropylmethacrylat (CAS: 2761-09-3), 4-Hydroxybutylacrylat (CAS: 2478-10-6), Isobornylacrylat (CAS: 5888-33-5), Isobornylmethacrylat (CAS: 7534-94-3), 1,4-Butandioldimethacrylat (CAS: 2082-81-7), 1,6-Hexandioldimethacrylat (CAS: 6606-59-3), 1,9-Nonandioldiacrylat (CAS: 107481-28-7), Tricyclo[5.2.1.0^{2,6}]decandimethanoldiacrylat (CAS: 42594-17-2), Cyclohexylmethacrylat (CAS: 101-43-9), Cyclohexylacrylat (CAS: 3066-71-5), Dicyclopentanylacrylat (CAS: 7398-56-3) oder Dicyclopentanylmethacrylat (CAS: 34759-34-7).

Insbesondere handelt es sich bei erfindungsgemäß eingesetzten Verbindungen (B) um n-Butylmethacrylat (CAS: 97-88-1), 2-Hydroxyethylmethacrylat (CAS: 868-77-9), Hydroxypropylmethacrylat, Isomerengemisch (CAS: 27813-02-1), 2-Hydroxypropylmethacrylat (CAS: 923-26-2), 3-Hydroxypropylmethacrylat (CAS: 2761-09-3), Isobornylacrylat (CAS: 5888-33-5), Isobornylmethacrylat (CAS: 7534-94-3), Cyclohexylmethacrylat (CAS: 101-43-9), Cyclohexylacrylat (CAS: 3066-71-5), Tricyclo[5.2.1.0^{2,6}]decandimethanoldiacrylat (CAS: 42594-17-2), Dicyclopentanylacrylat (CAS: 7398-56-3) oder Dicyclopentanylmethacrylat (CAS: 34759-34-7).

Die erfindungsgemäßen Zusammensetzungen enthalten Komponente (B) in Mengen von vorzugsweise 1 bis 250 Gewichtsteilen, besonders bevorzugt von 10 bis 100 Gewichtsteilen, insbesondere von 15 bis 50 Gewichtsteilen, jeweils bezogen auf 100 Gewichtsteile der Komponente (A).

Bevorzugt enthalten die erfindungsgemäßen Zusammensetzungen mindestens zwei unterschiedliche Komponenten (B), besonders bevorzugt mindestens zwei unterschiedliche Acrylate oder Methacrylate (B), wobei es sich insbesondere bei einer Komponente (B) um Verbindungen, ausgewählt aus 2-Hydroxyethylacrylat, 2-Hydroxyethylmethacrylat, Hydroxypropylmethacrylat (Isomerengemisch, CAS: 27813-02-1), 2-Hydroxypropylmethacrylat (CAS: 923-26-2) und 3-Hydroxypropylmethacrylat (CAS: 2761-09-3) handelt.

Ganz besonders bevorzugt enthalten die erfindungsgemäßen Zusammensetzungen mindestens eine Komponente (B), ausgewählt aus 2-Hydroxyethylmethacrylat, Hydroxypropylmethacrylat (Isomerengemisch, CAS: 27813-02-1), 2-Hydroxypropylmethacrylat (CAS: 923-26-2) und 3-Hydroxypropylmethacrylat (CAS: 2761-09-3) sowie mindestens eine weitere Komponente (B), ausgewählt aus 1,6-Hexandioldimethacrylat (CAS: 6606-59-3), 1,9-Nonandioldiacrylat (CAS: 107481-28-7), Poly(propylenglycol)diacrylat (CAS: 52496-08-9), Poly(propylenglycol)dimethacrylat (CAS: 25852-49-7), wobei diese Zusammensetzungen vorteilhafterweise geruchsarm sind.

Bei einer weiteren ganz besonders bevorzugten Variante enthalten die erfindungsgemäßen Zusammensetzungen mindestens eine Komponente (B), ausgewählt aus 2-Hydroxyethylmethacrylat, Hydroxypropylmethacrylat (Isomerengemisch, CAS: 27813-02-1), 2-Hydroxypropylmethacrylat (CAS: 923-26-2) und 3-Hydroxypropylmethacrylat (CAS: 2761-09-3) sowie mindestens eine weitere Komponente (B), ausgewählt aus Butylmethacrylat, 2-Ethylhexylacrylat (CAS: 103-11-7) und 2-Ethylhexylmethacrylat (CAS: 688-84-6) .

Bei einer weiteren ganz besonders bevorzugten Variante enthalten die erfindungsgemäßen Zusammensetzungen mindestens eine Komponente (B), ausgewählt aus 2-Hydroxyethylmethacrylat, Hydroxypropylmethacrylat (Isomerengemisch, CAS: 27813-02-1), 2-Hydroxypropylmethacrylat (CAS: 923-26-2) und 3-Hydroxypropylmethacrylat (CAS: 2761-09-3) sowie mindestens eine weitere Komponente (B), ausgewählt aus Tricyclo[5.2.1.0^{2,6}]decandimethanoldiacrylat (CAS: 42594-17-2), Dicyclopentanylacrylat (CAS: 7398-56-3), Dicyclopentanylmethacrylat (CAS: 34759-34-7), Cyclohexylacrylat, Cyclohexylmethacrylat, Isobornylacrylat und Isobornylmethacrylat.

Bei einer insbesonders bevorzugten Variante enthalten die erfindungsgemäßen Zusammensetzungen als Komponente (B) Hydroxypropylmethacrylat (Isomerengemisch, CAS: 27813-02-1) sowie eine weitere Komponente (B), ausgewählt aus Isobornylacrylat, Isobornylmethacrylat, Cyclohexylacrylat und Cyclohexylmethacrylat.

Die Vernetzung der erfindungsgemäßen Zusammensetzungen kann nach den bisher bekannten Methoden zur Polymerisation erfolgen, z.B. thermisch oder durch UV-Einstrahlung, wobei die thermische Aktivierung bevorzugt ist.

Als Initiatoren (C) kann es sich um alle bisher bekannten Radikalstarter handeln, wie z.B. anorganische oder organische Peroxide, Azoverbindungen, C-C-Initiatoren oder radikalbildende Härtersysteme in Kombination mit einem Metallsalz wie in DE-A 10 2013 114 061 und EP-B 2 985 318 beschrieben.

Beispiele für eingesetzte Initiatoren (C) sind freie Radikal-Initiatoren, wie organische Peroxide, wie Methylethylketonperoxid, Cyclohexanonperoxid, Acetylacetonperoxid, Methyl-isobutylketonperoxid, Dilauroylperoxid, Dibenzoylperoxid, Di(2,4-dichlorobenzoyl)peroxid, Di(4-methylbenzoyl)peroxid, Di(tert-butylperoxyisopropyl)benzol, Dicumylperoxid, 2,5-Dimethyl-2,5-di(tert-butylperoxy)hexan, 2,5-Dimethyl-2,5-di(tert-butylperoxy)hex-3-in, Di-tert-butylperoxid, tert-Butycumylperoxid, tert-Butylmonoperoxymaleat, tert-Amylperoxy-2-ethylhexanoat, tert-Amylperoxyneodecanoat, tert-Butylperoxyisobutyrat, tert-Butylperoxy-3,5,5-trimethylhexanoat, tert-Butylperoxybenzoat, tert-Butylperoxybenzoat, Butyl-4,4-di(tert-butylperoxy)valerat, 1,1-Di(tert-butylperoxy)-3,3,5-trimethylcyclohexan, Cumylhydroperoxid, tert-Butylhydroperoxid, Di(4-tert-butylcyclohexyl)peroxydicarbonat, Di(n-propyl)peroxydicarbonat und tert-Butylperoxy-2-ethylhexylcarbonat; Azo-Initiatoren, wie Azobis(isobutyronitril), 1,1'-Azobis(cyclohexancarbonitril) und 1,1-Azobis-(hexahydrobenzonitril); sowie C-C-Initiatoren, wie 1,1,2,2-Tetraphenyl-1,2-ethandiol.

Bevorzugte Initiatoren (C) sind organische Peroxide, besonders bevorzugt tert-Butylperoxybenzoat oder tert-Butylperoxy-3,5,5-trimethylhexanoat.

Die erfindungsgemäß eingesetzten Initiatoren (C) können in gegebenenfalls eingesetzten Organosiliciumverbindungen (G) oder Lösungsmitteln (L) gelöst oder dispergiert werden.

Die erfindungsgemäß eingesetzten Initiatoren (C) können bei 23°C und 1000 hPa sowohl fest als auch flüsig sein, wobei bei 23°C und 1000 hPa flüssige Initiatoren (C) bevorzugt sind.

Falls Initiatoren (C) in gegebenenfalls eingesetzten Organosiliciumverbindungen (G) oder Lösungsmitteln (L) gelöst oder dispergiert werden, dann weisen die Komponenten (G) oder (L) bevorzugt einen Siedepunkt von mindestens 100°C, besonders bevorzugt von mindestens 150°C, insbesondere mindestens 200°C, jeweils bei einem Druck von 1000 hPa, auf.

Bevorzugt werden thermisch aktivierbare Initiatoren (C) eingesetzt, welche eine 1h Halbwertszeit-Temperatur im Bereich von 60°C bis 200°C, besonders bevorzugt im Bereich von 80°C bis 160°C, insbesondere im Bereich von 90°C bis 130°C, aufweisen.

Die erfindungsgemäßen Zusammensetzungen enthalten Initiatoren (C) in Mengen von vorzugsweise 0,1 bis 5 Gewichtsteilen, besonders bevorzugt von 0,2 bis 3 Gewichtsteilen, insbesondere von 0,3 bis 2 Gewichtsteilen, jeweils bezogen auf 100 Gewichtsteile des Gesamtgewichts der Komponenten (A) und (B).

Bei den in den erfindungsgemäßen Zusammensetzungen eingesetzten Füllstoffen (D) kann es sich um beliebige, bisher bekannte Füllstoffe handeln.

Bei den erfindungsgemäß eingesetzten Füllstoffen (D) handelt es sich bevorzugt um solche, die sich bei 23°C und 1000 hPa weniger als 1 Gew.-% in Toluol lösen.

Beispiele für Füllstoffe (D) sind nicht verstärkende Füllstoffe, also Füllstoffe mit einer BET-Oberfläche von vorzugsweise bis zu 50 m²/g, wie Quarz, Quarzpulver, Quarzgranulat, geschmolzene Quarzpulver, Quarzglaspulver, Glaspulver, Glasbruch, Spiegelbruch, Cristobalit, Cristobalitpulver, Cristobalitgranulat, Diatomeenerde; in Wasser unlösliche Silikate, wie Calciumsilikat, Magnesiumsilikat, Zirkoniumsilikat, Talkum, Kaolin, Zeolithe; Metalloxidpulver, wie Aluminium-, Titan-, Eisen- oder Zinkoxide bzw. deren Mischoxide; Bariumsulfat, Calciumcarbonat, Marmormehl, Gips, Siliciumnitrid, Siliciumcarbid, Bornitrid, Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; Aluminiumtrihydroxid, Magnesiumhydroxid, hohlkugelförmige Füllstoffe, wie keramische Mikrokugel, wie z.B. solche erhältlich unter der Handelsbezeichnung Zeeospheres™ bei der Fa. 3M Deutschland GmbH in D-Neuss; faserförmige Füllstoffe, wie Wollastonit, Montmorillonit, Bentonit sowie geschnittene und/oder gemahlene Fasern aus Glas (Glaskurzfasern) oder Mineralwolle; Fasergewebe bestehend aus Glas, Kohlenstoff oder Kunststoff. Die genannten Füllstoffe können hydrophobiert sein, beispielsweise durch die Behandlung mit Organosilanen bzw. - siloxanen oder mit Stearinsäure.

Die erfindungsgemäß eingesetzten Füllstoffe (D) können sowohl jeder einzeln als auch in beliebiger Mischung untereinander eingesetzt werden.

Bevorzugt handelt es sich bei Komponente (D) um solche, ausgewählt aus teilchenförmigen Füllstoffen inklusive Fasern bis zu einer Länge von 5 cm (D1) und Faserhalbzeug enthaltend Fasern mit einer Länge von über 5 cm (D2).

Die erfindungsgemäß eingesetzten Füllstoffe (D1) haben einen SiO₂-Gehalt von bevorzugt mehr als 85 Gew.-%, besonders bevorzugt von mehr als 95 Gew.-%, insbesondere von mehr als 97 Gew.-%.

Bevorzugt handelt es sich bei den erfindungsgemäß eingesetzten Füllstoffen (D1) um anorganische Füllstoffe, besonders bevorzugt um anorganische siliciumhaltige Füllstoffe, insbesondere um solche aus natürlichen Quellen, wie Quarz, Quarzpulver, Quarzgranulat, geschmolzene Quarzpulver, Cristobalit, Cristobalitpulver, Cristobalitgranulat, und um faserförmige siliciumhaltige Füllstoffe aus natürlichen Quellen wie Montmorillonit und Wollastonit, oder um synthetische siliciumhaltige Produkte wie pyrogene Kieselsäure, welche durch Flammenhydrolyse von z.B. Tetrachlorsilan in einer Knallgasflamme erhalten werden kann ("fumed silica") oder um anorganische faserförmige synthetische siliciumhaltige Füllstoffe wie geschnittene oder gemahlene Glaskurzfasern. Besonders bevorzugt handelt es sich bei Füllstoff (D1) um Quarzpulver, Quarzgranulat, Cristobalitpulver, Cristobalitgranulat, Montmorillonit oder Wollastonit.

Insbesondere handelt es sich bei Füllstoff (D1) um Quarzpulver, Quarzgranulat, Cristobalitpulver oder Cristobalitgranulat.

Bei den eingesetzten Füllstoffen (D2) handelt es sich bevorzugt um Gewebe, Gelege, Gestricke, Geflechte, Matten oder Vliesstoffe, wobei die Fasern aus allen bisher bekannten faserbildenden Materialien bestehen können, wie anorganischen Fasern aus Basalt, Bor, Glas, Keramik oder Quarz; metallischen Fasern aus Stahl; organischen Fasern aus Aramid, Kohlenstoff, PPBO, Polyester, Polyamid, Polyethylen oder Polypropylen; sowie Naturfaser aus Flachs, Hanf, Holz oder Sisal.

Die erfindungsgemäß eingesetzten Füllstoffe (D1) und (D2) können gegebenenfalls oberflächenbehandelt sein. Bevorzugt sind die erfindungsgemäß eingesetzten Füllstoffe (D1) nicht oberflächenbehandelt. Bevorzugt sind die erfindungsgemäß eingesetzten Füllstoffe (D2) oberflächenbehandelt.

In einer bevorzugten Ausführungsform handelt es sich bei den erfindungsgemäßen Zusammensetzungen um solche, die als Füllstoffe (D) teilchenförmige Füllstoffe (D1) enthalten (Zusammensetzung 1).

In einer bevorzugten Ausführungsform enthalten die erfindungsgemäßen Zusammensetzungen 1 als Komponente (D1) Mischungen enthaltend feinkörnige und grobkörnige Füllstoffe.

Falls die erfindungsgemäßen Zusammensetzungen 1 als Füllstoff (D1) Mischungen aus feinen und groben Füllstoffen enthalten, handelt es sich bevorzugt um solche, ausgewählt aus Quarz und Cristobalit, besonders bevorzugt um Quarz und Cristobalit aus natürlichen Quellen, insbesondere um Mischungen aus feinem und grobem Quarz.

Die erfindungsgemäß eingesetzten feinkörnigen Füllstoffe (D1) weisen Korngrößen von vorzugsweise 0,02 µm bis kleiner 200 µm, bevorzugt 0,1 µm bis kleiner 200 µm, besonders bevorzugt 0,3 µm bis 100 µm, auf. Bevorzugt weisen höchstens 90 Gew.-% der erfindungsgemäß eingesetzten feinkörnigen Füllstoffe (D1) Korngrößen von 0,02 µm bis kleiner 100 µm auf, besonders bevorzugt weisen höchstens 90 Gew.-% der erfindungsgemäß eingesetzten feinkörnigen Füllstoffe (D1) Korngrößen von 0,02 µm bis kleiner 70 µm auf. Im Falle von faserförmigen Füllstoffen entspricht dies der längsten Ausdehnung der Faser.

Die erfindungsgemäß eingesetzten grobkörnigen Füllstoffe (D1) weisen Korngrößen von vorzugsweise mindestens 0,2 mm, bevorzugt von 0,2 mm bis 10 mm, besonders bevorzugt von 0,2 mm bis 5 mm, insbesondere 0,2 mm bis 3 mm, auf.

In einer weiteren bevorzugten Ausführungsform besteht Komponente (D1) zu mindestens 80 Gew.-%, besonders bevorzugt zu mindestens 90 Gew.-%, aus einer Mischung aus feinkörnigen Füllstoffen mit Korngrößen von 0,1 µm bis kleiner 200 µm und grobkörnigen Füllstoffen mit Korngrößen von 0,2 mm bis 10 mm.

Als grobkörniger Füllstoff (D1) wird insbesondere Quarz oder Cristobalit aus natürlichen Quellen eingesetzt.

Wenn als Komponente (D1) Mischungen aus feinkörnigen und grobkörnigen Füllstoffen eingesetzt werden, dann beträgt das Gewichtsverhältnis von feinkörnigen zu grobkörnigen Füllstoffen bevorzugt 5:1 bis 1:5, besonders bevorzugt 4:1 bis 1:4, insbesondere 3:1 bis 1:3.

Mit Änderung des Verhältnisses von feinkörnigen zu grobkörnigen Füllstoffen kann sich gleichzeitig auch die Biegefestigkeit ändern; z.B. kann mit zunehmendem Verhältnis von feinkörnigen zu grobkörnigen Füllstoffen die Biegefestigkeit zunehmen, wobei gegebenenfalls der Anteil der Komponenten (A) und (B) an der Gesamtmischung - aufgrund der größeren Gesamtoberfläche der Füllstoffpartikel - erhöht werden muss.

Die Korngrößenverteilung von Partikeln >500 µm wird bevorzugt mit einem Luftstrahlsieb e200 LS von der Firma ALPINE analysiert mit Analysensieben entsprechend den Anforderungen nach DIN ISO 3310-1. Die Analyse der Partikelgrößenverteilung im Bereich von etwa 0,02 µm bis 500 µm wird bevorzugt mit einem CILAS 1064 PARTICLE SIZE ANALYZER von der Firma Cilas durchgeführt.

In einer weiteren bevorzugten Ausführungsform enthalten die erfindungsgemäßen Zusammensetzungen 1 als Komponente (D1) ausschließlich feinkörnige Füllstoffe.

Die erfindungsgemäßen Zusammensetzungen 1 enthalten Füllstoffe (D1) in Mengen von insgesamt bevorzugt 70 bis 99 Gewichtsteilen, besonders bevorzugt von 80 bis 95 Gewichtsteilen, insbesondere von 87 bis 92 Gewichtsteilen, jeweils bezogen auf 100 Gewichtsteile der erfindungsgemäßen Zusammensetzung.

In den erfindungsgemäßen Zusammensetzungen 1 besteht Füllstoff (D) bevorzugt zum überwiegenden Teil, besonders bevorzugt vollständig, aus Füllstoff (D1).

In einer weiteren bevorzugten Ausführungsform handelt es sich bei den erfindungsgemäßen Zusammensetzungen um solche, die als Füllstoffe (D) Faserhalbzeuge (D2) enthalten (Zusammensetzung 2) .

Bevorzugt enthalten die erfindungsgemäßen Zusammensetzungen 2 als Füllstoff (D2) Fasergewebe, Fasergelege, Fasergestricke oder Fasergeflechte, besonders bevorzugt jeweils bestehend aus Kohlefasern, Glasfasern oder Aramid.

Die erfindungsgemäß eingesetzten Fasergewebe (D2) oder Fasergelege (D2) werden bevorzugt jeweils mehrlagig eingesetzt.

Die erfindungsgemäßen Zusammensetzungen 2 enthalten Füllstoffe (D2) in Mengen von insgesamt bevorzugt 40 bis 90 Gewichtsteilen, besonders bevorzugt von 50 bis 80 Gewichtsteilen, jeweils bezogen auf 100 Gewichtsteile der erfindungsgemäßen Zusammensetzung.

In den erfindungsgemäßen Zusammensetzungen 2 besteht Füllstoff (D) bevorzugt zum überwiegenden Teil, besonders bevorzugt vollständig, aus Komponente (D2).

In einer bevorzugten Ausführungsform besteht Komponente (D2) zu mindestens 80 Gew.-%, besonders bevorzugt zu mindestens 90 Gew.-%, aus Fasergeweben, Fasergelegen, Fasergestricken oder Fasergeflechten.

Bei den erfindungsgemäß eingesetzten Aminen (K) handelt es sich bevorzugt um organische Verbindungen (K1), welche keine Silicium-Atome aufweisen, oder um Organosiliciumverbindungen (K2).

Bei den erfindungsgemäß eingesetzten Aminen (K1) handelt es bevorzugt um solche der Formel

R⁷₃N (III),

wobei
R⁷ gleich oder verschieden sein kann und Wasserstoffatom oder einwertige oder zweiwertige, gegebenenfalls mit Hydroxygruppen, Halogenatomen, Aminogruppen, Ethergruppen, Estergruppen, Epoxygruppen, Mercaptogruppen, Cyanogruppen oder (Poly)glykolresten substituierte Kohlenwasserstoffreste, die durch Heteroatome unterbrochene sein können, bedeutet,
mit der Maßgabe, dass in Formel (III) höchstens zwei Reste R⁷ die Bedeutung von Wasserstoffatom haben,
oder um aliphatische cyclische Amine, wie beispielsweise Piperidin und Morpholin.

Beispiele für Reste R⁷ sind die für R und R¹ angegebenen Beispiele sowie Reste der Formel (II).

Bei den Resten R⁷ handelt es sich vorzugsweise um Wasserstoffatom oder gegebenenfalls mit Hydroxy-, Allyl-, Acryl- oder Methacrylgruppen substituierte, gegebenenfalls durch Heteroatome unterbrochene Kohlenwasserstoffreste mit 1 bis 20 Kohlenstoffatomen, besonders bevorzugt um Wasserstoffatom oder den Methyl-, Ethyl-, Propyl-, Butyl-, Octyl-, Undecyl-, Hexadecyl-, Acryloxyethyl-, Methacryloxyethyl-, Acrylamidopropyl- oder den Methacrylamidopropylrest.

Beispiele für erfindungsgemäß eingesetzte Verbindungen (K1) sind Butylamin, Pentylamin, Hexylamin, Cyclohexylamin, Heptylamin, Octylamin, 1,1,3,3-Tetramethylbutylamin, 2-Ethylhexylamin, Nonylamin, 2-Methyl-2-heptylamin, Decylamin, Undecylamin, Dodecylamin, Tridecylamin, Tetradecylamin, Pentadecylamin, Hexadecylamin, Octadecylamin, Diethyl-n-propylamin, Cyclohexylmethylamin, Dibutylamin, Dioctylamin, Bis(2-Ethylhexyl)amin, Piperidin, Piperazin, Pyrrolidin, Triethylamin, Tributylamin, 1,4-Diazabicyclo[2.2.2]octan, Trioctylamin, Tris(2-Ethylhexyl)amin, Triethanolamin, 2-Aminoethanol, 2-Amino-n-propanol, 2-Amino-2-methyl-l-propanol, 2-Dimethylamino-2-methyl-1-propanol, N,N-Diethylethanolamin, Ethylendiamin, Cocosfettamin, Cocosfettmethylamin, N,N-Dimethylethanolamin, 2-(Diethylamino)ethylmethacrylat (CAS: 105-16-8), 2-(Dimethylamino)ethylacrylat (CAS: 2439-35-2), 2-(Dimethylamino)ethylmethacrylat (CAS: 2867-47-2), 2-[2,2-Bis(2-prop-2-enoyloxyethoxymethyl)butoxy]ethyl-3-(dibutylamino)propanoat (CAS: 195008-76-5), 2-N-Morpholinoethylmethacrylat, 2,2,6,6-Tetramethyl-4-piperidyl-acrylat, 2,2,6,6-Tetramethyl-4-piperidylmethacrylat, 2-N-Morpholinoethylmethacrylat, 2-tert-Butylaminoethylmethacrylat, 3-(Dimethylamino)propylmethacrylat, Ethyl-3-(dimethylamino)acrylat (CAS: 924-99-2), Piperidinethylmethacrylat, tert-Butylaminoethylmethacrylat, N-[3-(Dimethylamino)propyl]methacrylamid (CAS: 5205-93-6) und N-[3-(Dimethylamino)propyl]acrylamid (CAS: 3845-76-9), 1,8-Diazabicyclo-[5.4.0]-undec-7-en (DBU), 1,5,7-Triazabicyclo[4.4.0]dec-5-en (TBD), 1,5-Diazabicyclo[4.3.0]non-5-en (DBN), N,N,N',N'-Tetramethylguanidin (TMG), N,N-Dimethylanilin, N,N-Diethylanilin und N,N-Dimethyl-p-toluidin.

Bevorzugt handelt es sich bei den erfindungsgemäß eingesetzten Verbindungen (K1) um Octylamin, Dioctylamin, Trioctylamin, 2-Ethylhexylamin, Bis(2-Ethylhexyl)amin, Tris(2-Ethylhexyl)amin, Undecylamin, Hexadecylamin, 2-(Dimethylamino)ethylacrylat (CAS: 2439-35-2), 2-(Dimethylamino)ethylmethacrylat (CAS: 2867-47-2), 2-(Diethylamino)ethylmethacrylat (CAS: 105-16-8), N-[3-(Dimethylamino)propyl]methacrylamid (CAS: 5205-93-6) oder N-[3-(Dimethylamino)propyl]acrylamid (CAS: 3845-76-9).

Besonders bevorzugt handelt es sich bei den erfindungsgemäß eingesetzten Verbindungen (K1) um Undecylamin, Hexadecylamin, 2-(Dimethylamino)ethylacrylat (CAS: 2439-35-2), 2-(Dimethylamino)ethylmethacrylat (CAS: 2867-47-2), N-[3-(Dimethylamino)-propyl]methacrylamid (CAS: 5205-93-6) oder N-[3-(Dimethylamino)propyl]acrylamid (CAS: 3845-76-9).

Bei den erfindungsgemäß eingesetzten Aminen (K2) handelt es bevorzugt um solche aus Einheiten der Formel

R⁸ₖR¹⁰ₗSi(OR⁹)ₘO_{(4-k-l-m)/2} (IV) ,

worin
R⁸ gleich oder verschieden sein kann und einen einwertigen, SiC-gebundenen, von basischem Stickstoff freien organischen Rest bedeutet,
R⁹ gleich oder verschieden sein kann und eine für Rest R² angegebene Bedeutung hat,
R¹⁰ gleich oder verschieden sein kann und einen einwertigen, SiC-gebundenen Rest mit basischem Stickstoff bedeutet,
k 0, 1, 2, oder 3,
l 0, 1, 2, 3 oder 4 und
m 0, 1, 2 oder 3 ist,
mit der Maßgabe, dass die Summe k+l+m kleiner oder gleich 4 ist und pro Molekül mindestens ein Rest R¹⁰ anwesend ist.

Beispiele für Reste R⁸ sind die für R und R¹ angegebenen Beispiele sowie Reste der Formel (II).

Bei Rest R⁸ handelt es sich vorzugsweise um Kohlenwasserstoffreste mit 1 bis 18 Kohlenstoffatomen, wobei der Methyl-, Ethyl- oder n-Propylrest besonders bevorzugt sind, insbesondere der Methylrest.

Beispiele für Rest R⁹ sind die für Rest R² angegebenen Beispiele.

Vorzugsweise handelt es sich bei Rest R⁹ um Wasserstoffatom, den Methyl- oder den Ethylrest.

Beispiele für Reste R¹⁰ sind Reste der Formeln H₂NCH₂-, H₂N(CH₂)₂-, H₂N(CH₂)₃-, H₂N(CH₂)₂NH(CH₂)₂-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, H₃CNH(CH₂)₂-, C₂H₅NH(CH₂)₂-, H₂N(CH₂)₄-, H₂N(CH₂)₅-, H(NHCH₂CH₂)₃-, C₄H₉NH(CH₂)₂NH(CH₂)₂-, cyclo-C₆H₁₁NH(CH₂)₃-, cyclo-C₆H_{11N}H(CH₂)₂-, (CH₃)₂N(CH₂)₃-, (CH₃)₂N(CH₂)₂-, (C₂H₅)₂N(CH₂)₃- und (C₂H₅)₂N(CH₂)₂-.

Bevorzugt handelt es sich bei R¹⁰ um H₂N(CH₂)₃-, H₂N(CH₂)₂NH(CH₂)₃-, H₃CNH(CH₂)₃-, C₂H₅NH(CH₂)₃- oder cyclo-C₆H₁₁NH (CH₂)₃-Rest, wobei der H₂N(CH₂)₂NH(CH₂)₃- oder der NH₂(CH₂)₃-Rest besonders bevorzugt sind.

Bei den erfindungsgemäß eingesetzten Organosiliciumverbindungen (K2) kann es sich sowohl um Silane handeln, d.h. Verbindungen der Formel (IV) mit k+l+m=4, als auch um Siloxane, d.h. Verbindungen aus Einheiten der Formel (IV) mit k+l+m ≤3.

Falls es sich bei den Organosiliciumverbindungen (K2) um Silane handelt, so ist k bevorzugt 0, 1 oder 2, besonders bevorzugt 0 oder 1, l bevorzugt 1 oder 2, besonders bevorzugt 1, und m bevorzugt 1, 2 oder 3, besonders bevorzugt 2 oder 3, mit der Maßgabe, dass die Summe aus k+l+m gleich 4 ist.

Beispiele für erfindungsgemäß eingesetzte Silane (K2) der Formel (IV) sind H₂N(CH₂)₃-Si(OCH₃)₃,H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH (CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₃-Si(OH)₃, H₂N(CH₂)₂NH(CH₂)₃-Si(OH)₂CH₃, H₂N(CH₂)₂NH(CH₂)₂NH(CH₂)₃-Si(OCH₃)₃, H₂N(CH₂)₂NH(CH₂)₂NH(CH₂)₃-Si(OC₂H₅)₃, C₆H₅NH(CH₂)₃-Si(OC₂H₅)₃, C₆H₅NH(CH₂)₃-Si(OCH₃)₃, Morpholino-CH₂-Si (OC₂H₅)₃, Morpholino-CH₂-Si(OCH₃)₃, (C₄H₉)₂N-CH₂-Si (OC₂H₅)₃, (C₄H₉)₂N-CH₂-Si(OCH₃)₃, cyclo-C₆H₁₁NH(CH₂)₃-Si(OCH₃)₃, cyclo-C₆H_{11N}H(CH₂)₃-Si(OC₂H₅)₃, cyclo-C₆H₁₁NH(CH₂)₃-Si(OCH₃)₂CH₃, cyclo-C₆H₁₁NH (CH₂)₃-Si(OC₂H₅)₂CH₃, cyclo-C₆H₁₁NH(CH₂)₃-Si(OH)₃, cyclo-C₆H_{11N}H(CH₂)₃-Si(OH)₂CH₃, HN((CH₂)₃-Si(OCH₃)₃)₂ und HN((CH₂)₃-Si(OC₂H₅)₃)₂, wobei H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₃-Si(OCH₃)₃, H₂N(CH₂)₃-Si(OC₂H₅)₃, H₂N(CH₂)₃-Si(OCH₃)₂CH₃ oder H₂N(CH₂)₃-Si(OC₂H₅)₂CH₃ bevorzugt, und H₂N(CH₂)₂NH(CH₂)₃-Si(OCH₃)₃, H₂N(CH₂)₂NH(CH₂)₃-Si(OCH₃)₂CH₃, H₂N(CH₂)₂NH(CH₂)₃-Si(OC₂H₅)₃ oder H₂N(CH₂)₂NH(CH₂)₃-Si(OC₂H₅)₂CH₃ besonders bevorzugt sind.

Falls es sich bei der Organosiliciumverbindung (K2) um Organopolysiloxane handelt, ist der durchschnittliche Wert von k vorzugsweise zwischen 0,5 und 2,5, besonders bevorzugt zwischen 1,4 und 2,0, der durchschnittliche Wert von l vorzugsweise zwischen 0,01 und 1,0, besonders bevorzugt zwischen 0,01 und 0,6, und der durchschnittliche Wert von m vorzugsweise zwischen 0 und 2,0, besonders bevorzugt zwischen 0 und 0,2, mit der Maßgabe, dass die Summe aus k, l und m kleiner oder gleich 3 ist.

Die erfindungsgemäß einsetzbaren Organopolysiloxane (K2) aus Einheiten der Formel (IV) haben eine Viskosität bei 25°C von vorzugsweise 5 bis 10⁵ mPas, besonders bevorzugt von 10 bis 10⁴ mPas.

Beispiele für die erfindungsgemäß einsetzbaren Organopolysiloxane (K2) aus Einheiten der Formel (IV) sind
H₂N (CH₂)₃-Si(OCH₃)₂-O-Si(CH₃)(OCH₃)₂,
H₂N(CH₂)₃-Si(OC₂H₅)₂-O-Si(CH₃)(OCH₃)₂,
H₂N(CH₂)₃-Si(OC₂H₅)₂-O-Si(CH₃)(OC₂H₅)₂,
H₂N(CH₂)₃-Si(OCH₃)(CH₃)-O-Si(CH₃)(OCH₃)₂,
H₂N(CH₂)₃-Si(OCH₃)(CH₃)-O-Si(OCH₃)₃,
H₂N(CH₂)₃-Si(OC₂H₅)(CH₃)-O-Si(OCH₃)₃,
H₂N(CH₂)₂NH(CH₂)₃-Si(OCH₃)₂-O-Si(CH₃)(OCH₃)₂,
H₂N(CH₂)₂NH(CH₂)₃-Si(OC₂H₅)₂-O-Si(CH₃)(OCH₃)₂,
H₂N(CH₂)₂NH(CH₂)₃-Si(OC₂H₅)₂-O-Si(CH₃)(OC₂H₅)₂,
H₂N(CH₂)₂NH(CH₂)₃-Si(OCH₃)(CH₃)-O-Si(CH₃)(OCH₃)₂,
H₂N(CH₂)₂NH(CH₂)₃-Si(OCH₃)(CH₃)-O-Si(OCH₃)₃,
H₂N(CH₂)₂NH(CH₂)₃-Si(OC₂H₅)(CH₃)-O-Si(OCH₃)₃,
cyclo-C₆H₁₁NH(CH₂)₃-Si(OCH₃)₂-O-Si(CH₃)(OCH₃)₂,
cyclo-C₆H₁₁NH(CH₂)₃-Si(OC₂H₅)₂-O-Si(CH₃)(OCH₃)₂,
cyclo-C₆H₁₁NH(CH₂)₃-Si(OC₂H₅)₂-O-Si(CH₃)(OC₂H₅)₂,
cyclo-C₆H₁₁NH (CH₂)₃-Si(OCH₃)(CH₃)-O-Si(CH₃)(OCH₃)₂,
cyclo-C₆H_{11N}H(CH₂)₃-Si(OCH₃)(CH₃)-O-Si(OCH₃)₃ und
cyclo-C₆H₁₁NH(CH₂)₃-Si(OC₂H₅)(CH₃)-O-Si(OCH₃)₃,
H₂N(CH₂)₃-Si(OCH₃)₂-(O-Si(CH₃)₂)₀₋₁₀₀-0-Si(OCH₃)₂-(CH₂)₃NH₂,
H₂N(CH₂)₃-Si(OCH₂CH₃)₂-(O-Si(OCH₂CH₃)₂)₀₋₁₀₀-(O-Si(OCH₂CH₃)(CH₂)₃NH₂)₁₋₁₀₀-O-Si(OCH₂CH₃)₂-(CH₂)₃NH₂,
Si(OCH₂CH₃)₃-(O-Si(OCH₂CH₃)₂)₀₋₁₀₀-(O-Si(OCH₂CH₃)(CH₂)₃NH₂)₀₋₁₀₀-O-Si (OCH₂CH₃)₃,
H₂N(CH₂)₂NH(CH₂)₃-Si(OCH₃)₂-(O-Si(CH₃)₂)₀₋₁₀₀-O-Si(OCH₃)₂-(CH₂)₃ NH(CH₂)₂NH₂,
H₂N(CH₂)₂NH(CH₂)₃-Si(OCH₃)₂-(O-Si(CH₃)₂)₀₋₁₀₀-(O-Si(OCH₃)(CH₂)₃ NH(CH₂)₂NH₂)₀₋₁₀₀-O-Si(OCH₃)₂-(CH₂)₃NH(CH₂)₂NH₂ ,
HO-Si(CH₃)₂-(O-Si(CH₃)₂)₀₋₁₀₀-(O-Si(OCH₃)(CH₂)₃NH(CH₂)₂NH₂)₀₋₁₀₀-O-Si(CH₃)₂-OH und
cyclo-C₆H₁₁NH(CH₂)₃-Si(OCH₃)₂-(O-Si(CH₃)₂)₁₋₁₀₀-O-Si(OCH₃)₂-(CH₂)₃NH cyclo-C₆H₁₁ und/oder deren Teilhydrolysate und/oder durch Equilibrierungsreaktionen mit Si-O-Si-haltigen Verbindungen herstellbare Verbindungen, wobei H₂N(CH₂)₃-Si(OC₂H₅)₂-O-Si(CH₃)(OC₂H₅)₂, H₂N(CH₂)₃-Si(OCH₂CH₃)₂⁻ (O-Si (OCH₂CH₃)₂)₁₋₁₀₀-(O-Si(OCH₂CH₃)(CH₂)₃NH₂)₀₋₁₀₀-O-Si (OCH₂CH₃)₂-(CH₂)₃NH₂ oder H₂N(CH₂)₂NH(CH₂)₃-Si(OCH₃)₂-(O-Si(CH₃)₂)₀₋₁₀₀-(O-Si(OCH₃)(CH₂)₃ NH(CH₂)₂NH₂)₀₋₁₀₀-O-Si(OCH₃)₂-(CH₂)₃NH(CH₂)₂NH₂ besonders bevorzugt sind.

Organosiliciumverbindungen (K2) aus Einheiten der Formel (IV) sind handelsübliche Produkte bzw. können nach in der Siliciumchemie gängigen Verfahren hergestellt werden.

Falls erforderlich, kann Komponente (K) in Lösungsmitteln (L) und/oder Organosiliciumverbindungen (G) gelöst werden.

Die erfindungsgemäßen Zusammensetzungen enthalten Komponente (K) in Mengen von vorzugsweise 0,001 bis 5 Gewichtsteilen, bevorzugt 0,001 bis 2 Gewichtsteilen, besonders bevorzugt 0,01 bis 1 Gewichtsteilen, insbesondere 0,05 bis 0,5 Gewichtsteilen, jeweils bezogen auf 100 Gewichtsteile des Gesamtgewichts der Komponenten (A) und (B).

Zusätzlich zu den Komponenten (A), (B), (C), (D) und (K) können die erfindungsgemäßen Zusammensetzungen weitere Stoffe enthalten, die unterschiedlich sind zu Komponenten (A), (B), (C), (D) und (K), wie z.B. Beschleuniger (E), Hilfsstoffe (F), Organosiliciumverbindungen (G), Stabilisatoren (H), Lösungsmittel (L) und Modifikatoren (M).

Bei den in den erfindungsgemäßen Zusammensetzungen eingesetzten Beschleuniger (E) kann es sich um beliebige, bisher bekannte Beschleuniger für radikalisch und durch Kondensationsreaktion vernetzbare Massen handeln.

Beispiele für gegebenenfalls eingesetzte Komponente (E) sind Metall-carboxylate, wie Bismuth(III)-(2-ethylhexanoat), Di-octylzinn(IV)-laurat, Zink(II)-(2-ethylhexanoat), Cobalt(II)-(2-ethylhexanoat), Kupfer(II)-acetat, Mangan(II)-Acetat, Eisen(II)-acetat, Eisen(II)-ethylhexanoat, Barium(II)-ethylhexanoat, Zirconium(IV)-(2-ethylhexanoat); Metall-acetylacetonate, wie Bismuth-(III)-acetylacetonat, Zink(II)-acetylacetonat, Aluminium(III)-acetylacetonat, Titan(IV)-bis(acetylacetonat)-diisobutoxid); Metall-ethylacetoacetate, wie Titan(IV)-bis(ethylacetoacetat)-diisobutoxid), Titan(IV)-bis(ethylaceto-acetat)-diisopropoxid); Metallalkoholate, wie Aluminium(III)-ethoxid, Titan(IV)-(n-butoxid), Titan(IV)-(n-propoxid); sowie Metallhalogenide, wie Kupfer(I)-chlorid.

Bevorzugt handelt es sich bei gegebenenfalls eingesetzter Komponente (E) um Cobalt(II)-(2-ethylhexanoat) oder Dioctylzinn(IV)-laurat.

Falls erforderlich, kann Komponente (E) in Lösungsmitteln (L) und/oder Organosiliciumverbindungen (G) gelöst werden.

Die gegebenenfalls eingesetzte Komponente (E) kann bei 23°C und 1000 hPa sowohl fest als auch flüssig sein, wobei bei 23°C und 1000 hPa flüssige Komponente (E) bevorzugt ist.

Falls die erfindungsgemäßen Zusammensetzungen Beschleuniger (E) enthalten, handelt es sich um Mengen von bevorzugt 0,1 bis 5 Gewichtsteilen, besonders bevorzugt 0,1 bis 1 Gewichtsteilen, jeweils bezogen auf 100 Gewichtsteile des Gesamtgewichts der Komponenten (A) und (B). Bevorzugt wird in den erfindungsgemäßen Zusammensetzungen kein Beschleuniger (E) eingesetzt.

Bei erfindungsgemäß gegebenenfalls eingesetzter Komponente (F) handelt es sich bevorzugt um Pigmente, Farbstoffe, Riechstoffe, Hitzestabilisatoren oder flammabweisend machende Mittel.

Bevorzugt handelt es sich bei den gegebenenfalls eingesetzten Pigmenten (F) um anorganische Pigmente wie Eisenoxide (gelb, schwarz, rot), Chrom(III)-oxid, und Titandioxid, Ruß; Effektpigmente zur Erzeugung eines Metallic-Effekts wie Plättchen aus Gold, Silber, Kupfer, Aluminium, Silicium, Glimmer, ggf. beschichtet z.B. mit FeTiO₃, Fe₂O₃, TiO₂, Spiegelbruch, oder Flüssigkristallpigmente zur Erzeugung eines goniochromatischen Farbeffekts. Die Pigmente (F) können in Pulverform oder dispergiert in einer geeigneten Flüssigkeit, wie z.B. Organosiliciumverbindung (G) und/oder Lösungsmittel (L), eingesetzt werden. Des Weiteren können die Pigmente (F) auf die grobkörnigen Füllstoffe (D1) aufgezogen, als oberflächliche Beschichtung, eingesetzt werden.

Bevorzugt handelt es sich bei den gegebenenfalls eingesetzten Farbstoffen (F) um Phthalocyanine oder Azoverbindungen.

Bei der gegebenenfalls eingesetzten Komponente (F) handelt es sich bevorzugt um Pigmente (F).

Falls die erfindungsgemäßen Zusammensetzungen Hilfsstoffe (F) enthalten, handelt es sich um Mengen von bevorzugt 0,01 bis 20 Gewichtsteilen, besonders bevorzugt 0,1 bis 10 Gewichtsteilen, insbesondere 0,1 bis 5 Gewichtsteilen, jeweils bezogen auf 100 Gewichtsteile des Gesamtgewichts der Komponenten (A) und (B). Die erfindungsgemäßen Zusammensetzungen 1 enthalten vorzugsweise Hilfsstoffe (F), bevorzugt Pigmente (F), während die erfindungsgemäßen Zusammensetzungen 2 bevorzugt keine Hilfsstoffe (F) enthalten.

Vorzugsweise handelt es sich bei den gegebenenfalls eingesetzten Organosiliciumverbindungen (G) um solche, die unterschiedlich sind zu Komponenten (A) und (K) sind, bevorzugt um solche, ausgewählt aus Silanen, im Wesentlichen linearen Siloxanen und aliphatisch gesättigten Siliconharzen, die jeweils frei von basischem Stickstoff sind.

Bevorzugt handelt es sich bei den im Wesentlichen linearen Siloxanen (G) und den aliphatisch gesättigten Siliconharzen (G) um Verbindungen, die bei der Herstellung der Komponente (A) als Nebenprodukt entstehen können.

Besonders bevorzugt handelt es sich bei Komponente (G) um Silane, die frei von basischem Stickstoff sind.

Bevorzugt handelt es sich bei den gegebenenfalls eingesetzten Silanen (G) um n-Octyltrimethoxysilan, n-Octyltriethoxysilan, (2,4,4-Trimethylpentyl)trimethoxysilan, (2,4,4-Tri-methylpentyl)triethoxysilan, (2,4,4-Trimethylpentyl)methyldimethoxysilan, (2,4,4-Trimethylpentyl)methyldiethoxysilan, n-Octylmethyldimethoxysilan, n-Octylmethyldiethoxysilan, (Cyclohexyl)-trimethoxysilan, (Cyclohexyl)triethoxysilan, Cyclohexyl(methyl)dimethoxysilan, Cyclohexyl(methyl)diethoxysilan, Methyltrimethoxysilan, Methyltriethoxysilan, Dimethyldimethoxysilan, Dimethyldiethoxysilan, Tetraethylsilikat, Phenyltrimethoxysilan, Phenyltriethoxysilan, (Methacryloxymethyl)(methyl)dimethoxysilan, (Methacryloxymethyl)(methyl)diethoxysilan, (Methacryloxymethyl)trimethoxysilan, (Methacryloxymethyl)triethoxysilan, (Methacryloxypropyl)(methyl)dimethoxysilan, (Methacryloxypropyl)(methyl)diethoxysilan, 3-(Methacryloxypropyl)trimethoxysilan, 3-(Methacryloxypropyl)triethoxysilan, Vinyltrimethoxysilan, Vinyltriethoxysilan, 3-Glycidoxypropyltrimethoxysilan, 3-Glycidoxypropyltriethoxysilan, 3-(Triethoxysilyl)propylbernsteinsäureanhydrid, Bis(triethoxysilyl)ethan oder Bis(triethoxysilyl)ethen.

Besonders bevorzugt handelt es sich bei gegebenenfalls eingesetzte Silanen (G) um Tetraethylsilikat, Methyltriethoxysilan, Vinyltrimethoxysilan, Vinyltriethoxysilan, Bis(triethoxysilyl)-ethan, Bis(triethoxysilyl)ethen oder 3-Methacryloxypropyltrimethoxysilan.

Falls die erfindungsgemäßen Zusammensetzungen Komponente (G) enthalten, handelt es sich um Mengen von bevorzugt 1 bis 10 Gewichtsteilen, besonders bevorzugt 1 bis 5 Gewichtsteilen, jeweils bezogen auf 100 Gewichtsteile des Gesamtgewichts der Komponenten (A) und (B). Die erfindungsgemäßen Zusammensetzungen enthalten bevorzugt keine Komponente (G).

Bevorzugte Beispiele für gegebenenfalls eingesetzte Stabilisatoren (H) sind Keton-Acetale, wie 2,2-Dimethoxypropan; Epoxide, wie epoxydiertes Sojabohnenöl, Glycerindiglycidylether, Polypropylenglykol-diglycidylether und (3-Glycidoxypropyl)trimethoxysilan oder Radikalfänger, wie 4-Methoxyphenol, 4-tert-Butyl-1,2-dihydroxybenzol, 2,6-Di-tert-butyl-4-methylphenol, 2,6-Di-tert-butyl-p-kresol, 4-tert-Butylbrenzcatechin und Phenothiazin.

Falls die erfindungsgemäßen Zusammensetzungen Stabilisatoren (H) enthalten, handelt es sich um Mengen von bevorzugt 0,001 bis 1 Gewichtsteilen, besonders bevorzugt 0,005 bis 0,5 Gewichtsteilen, jeweils bezogen auf 100 Gewichtsteile der Summe von Komponenten (A) und (B). Die erfindungsgemäßen Zusammensetzungen enthalten bevorzugt Stabilisatoren (H).

Beispiele für gegebenenfalls eingesetztes Lösungsmittel (L) sind ein- und mehrwertige Alkohole, wie Methanol, Ethanol, n-Propanol, Isopropanol, n-Butanol, iso-Butanol, sec-Butanol, 1,2-Ethandiol, 1,2-Propandiol, 1,3-Propandiol, Polypropylenglycol und Polyethylenglycol; Ether, wie Methyl-tert.-butylether, Di-tert.-butylether und Di-, Tri- oder Tetraethylenglycoldimethylether; gesättigte Kohlenwasserstoffe, wie n-Hexan, Cyclohexan, n-Heptan, n-Octan und isomere Octane, sowie Gemische gesättigter Kohlenwasserstoffe mit Siedebereichen zwischen 60 und 300°C, wie sie unter den Handelsnamen Exxsol™, Hydroseal® oder Shellsol® erhältlich sind; Aldehyd-Acetale, wie Methylal, Ethylhexylal, Butylal, 1,3-Dioxolan und Glycerinformal; Ester, wie Ethylacetat, n-Butylacetat, Ethylenglykoldiacetat, 2-Methoxypropylacetat (MPA), Dipropylenglycoldibenzoat, Dicyclohexylphthalat und Ethylethoxypropionat und Carbonsäuren, wie Ethylhexansäure, n-Octansäure oder Neodecansäure.

Bevorzugte Lösungsmittel (L) sind Carbonsäuren, Carbonsäureester oder gesättigte Kohlenwasserstoffe, besonders bevorzugt Gemische gesättigter Kohlenwasserstoffe mit Siedebereichen zwischen 60 und 300°C bei 1000 hPa, Ethylhexansäure, n-Octansäure, Neodecansäure oder 2-Methoxypropylacetat (MPA).

Falls die erfindungsgemäßen Zusammensetzungen Lösungsmittel (L) enthalten, handelt es sich um Mengen von bevorzugt 0,1 bis 1 Gewichtsteilen, besonders bevorzugt 0,1 bis 0,5 Gewichtsteilen, jeweils bezogen auf 100 Gewichtsteile der Summe der Komponenten (A) und (B). Die erfindungsgemäßen Zusammensetzungen enthalten bevorzugt kein Lösungsmittel (L).

Beispiele für gegebenenfalls eingesetzte Modifikatoren (M) sind organische Vinylpolymere, wie Polyvinylacetate oder Polyvinylacetat-co-vinyllaurate, die bevorzugt bei 25°C und 1000 hPa in Komponente (B) löslich sind.

Falls Modifikatoren (M) eingesetzt werden, werden diese bevorzugt in Form einer homogene Mischung in Komponente (B) eingesetzt.

Falls die erfindungsgemäßen Zusammensetzungen Modifikatoren (M) enthalten, handelt es sich um Mengen von bevorzugt 5 bis 30 Gewichtsteilen, besonders bevorzugt 10 bis 20 Gewichtsteilen, jeweils bezogen auf 100 Gewichtsteile der Summe der Komponenten (A) und (B). Die erfindungsgemäßen Zusammensetzungen enthalten bevorzugt keine Modifikatoren (M).

Vorzugsweise handelt es sich bei den erfindungsgemäßen Zusammensetzungen um solche, enthaltend
(A) Organopolysiloxanharz,
(B) organische Verbindung mit mindestens einer Einheit der Formel (II),
(C) Initiator,
(D) Füllstoff,
gegebenenfalls (E) Beschleuniger,
gegebenenfalls (F) Pigment,
gegebenenfalls (G) Organosiliciumverbindungen,
(H) Stabilisator,
(K) Amin,
gegebenenfalls (L) Lösungsmittel und
gegebenenfalls (M) Modifikator.

Bevorzugt handelt es sich bei den erfindungsgemäßen Zusammensetzungen um solche, enthaltend
(A) Organopolysiloxanharz,
(B) organische Verbindung mit mindestens einer Acrylat- oder Methacrylateinheit,
(C) Initiator,
(D) Füllstoff,
(E) Beschleuniger,
gegebenenfalls (F) Pigment,
gegebenenfalls (G) Organosiliciumverbindungen,
(H) Stabilisator,
(K) Amin,
gegebenenfalls (L) Lösungsmittel und
gegebenenfalls (M) Modifikator.

Bevorzugt handelt es sich bei den erfindungsgemäßen Zusammensetzungen 1 um solche enthaltend
(A) Organopolysiloxanharz,
(B) organische Verbindung mit mindestens einer Einheit der Formel (II),
(C) Initiator,
(D1) Füllstoffe in Mengen von 70 bis 99 Gewichtsteilen, bezogen auf 100 Gewichtsteile der Zusammensetzung 1,
gegebenenfalls (E) Beschleuniger,
gegebenenfalls (F) Pigment,
gegebenenfalls (G) Organosiliciumverbindungen,
(H) Stabilisator,
(K2) Amin,
gegebenenfalls (L) Lösungsmittel und
gegebenenfalls (M) Modifikator.

Besonders bevorzugt handelt es sich bei den erfindungsgemäßen Zusammensetzungen 1 um solche enthaltend
(A) Organopolysiloxanharz,
(B) organische Verbindung mit mindestens einer Acrylat- oder Methacrylateinheit,
(C) Initiator,
(D1) Füllstoffe in Mengen von 80 bis 95 Gewichtsteilen, bezogen auf 100 Gewichtsteile der Zusammensetzung 1, mit der Maßgabe, dass als Füllstoff (D1) Mischungen enthaltend feinkörnige und grobkörnige Füllstoffe eingesetzt werden, wobei das Gewichtsverhältnis von feinkörnigen zu grobkörnigen Füllstoffen 5:1 bis 1:5 beträgt,
gegebenenfalls (E) Beschleuniger,
(F) Pigment,
gegebenenfalls (G) Organosiliciumverbindungen,
(H) Stabilisator,
(K2) Amin,
gegebenenfalls (L) Lösungsmittel und
gegebenenfalls (M) Modifikator.

Bevorzugt handelt es sich bei den erfindungsgemäßen Zusammesetzungen 2 um solche enthaltend (A) Organopolysiloxanharz, (B) organische Verbindung mit mindestens einer Einheit der Formel (II),
(C) Initiator,
(D2) Füllstoffe in Mengen von mindestens 40 bis 90 Gewichtsteilen, bezogen auf 100 Gewichtsteile der Zusammensetzung 2, mit der Maßgabe, dass Füllstoff (D2) aus mehreren Lagen Fasergewebe oder mehreren Lagen Fasergelege besteht, gegebenenfalls (E) Beschleuniger,
gegebenenfalls (F) Pigment,
gegebenenfalls (G) Organosiliciumverbindungen,
(H) Stabilisator,
(K) Amin,
gegebenenfalls (L) Lösungsmittel und
gegebenenfalls (M) Modifikator.

Besonders bevorzugt handelt es sich bei den erfindungsgemäßen Zusammensetzungen 2 um solche enthaltend
(A) Organopolysiloxanharz,
(B) organische Verbindung mit mindestens einer Acrylat- oder Methacrylateinheit,
(C) Initiator,
(D2) Füllstoffe in Mengen von mindestens 40 bis 90 Gewichtsteilen, bezogen auf 100 Gewichtsteile der Zusammensetzung 2, mit der Maßgabe, dass Füllstoff (D2) aus mehreren Lagen Fasergewebe oder mehreren Lagen Fasergelege beseteht,
gegebenenfalls (E) Beschleuniger,
gegebenenfalls (F) Pigment,
gegebenenfalls (G) Organosiliciumverbindungen,
(H) Stabilisator,
(K2) Amin,
gegebenenfalls (L) Lösungsmittel und
gegebenenfalls (M) Modifikator.

Die erfindungsgemäßen Zusammensetzungen bestehen bevorzugt zu mindestens 95 Gew.-%, besonders bevorzugt zu mindestens 99 Gew.-%, aus den Komponenten (A), (B), (C), (D) und (K) sowie gegebenenfalls (E), (F), (G), (H), (L) und (M).

Die erfindungsgemäßen Zusammensetzungen enthalten außer den Komponenten (A), (B), (C), (D) und (K) sowie gegebenenfalls (E), (F), (G), (H), (L) und (M) sowie den gegebenenfalls rohstofftypischen Verunreinigungen, wie beispielsweise Katalysatorreste, wie Natriumchlord oder Kaliumchlorid; sowie Verunreinigungen in technischen Acrylatmonomeren und gegebenenfalls Umsetzungsprodukte der eingesetzten Komponenten, die beim Vermischen bzw. bei der Lagerung entstehen, keine weiteren Komponenten.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Die erfindungsgemäßen Zusammensetzungen können durch Mischen der einzelnen Komponenten in beliebiger Reihenfolge und auf bisher bekannte Art und Weise hergestellt werden.

Ein weiterer Gegenstand der vorliegenden Erfindung ist ein Verfahren zur Herstellung der erfindungsgemäßen Zusammensetzungen durch Mischen der einzelnen Komponenten in beliebiger Reihenfolge.

Beim erfindungsgemäßen Verfahren wird bevorzugt Füllstoff (D) mit Amin (K), besonders bevorzugt mit Amin (K2), gegebenenfalls als Mischung mit Organosiliciumverbindungen (G) und/oder Lösungsmittel (L), vorgemischt. Falls es sich bei Füllstoff (D) um eine Mischung von feinkörnigem und grobkörnigem Füllstoff (D1) handelt, wird vorzugsweise nur der grobkörnige Füllstoff (D1) mit Amin (K), gegebenenfalls als Mischung mit Organosiliciumverbindungen (G) und/oder Lösungsmittel (L), vorgemischt.

Bei dem erfindungsgemäßen Verfahren kann das Vermischen bei Temperaturen im Bereich von bevorzugt 10 bis 50°C, besonders bevorzugt im Bereich von 15 bis 45°C, insbesondere bei Temperaturen von 20 bis 40°C erfolgen. Ganz besonders bevorzugt wird bei der Temperatur gemischt, die sich beim Vermischen bei Umgebungstemperatur aus der Temperatur der Rohstoffe plus der Temperaturerhöhung durch den Energieeintrag beim Mischen ergibt, wobei nach Bedarf geheizt oder gekühlt werden kann.

Das Vermischen kann beim Druck der umgebenden Atmosphäre, also etwa 900 bis 1100 hPa, erfolgen. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Das erfindungsgemäße Verfahren kann kontinuierlich, diskontinuierlich oder semikontinuierlich durchgeführt werden, bevorzugt wird es diskontinuierlich durchgeführt.

Bei einer bevorzugten Ausführungsform des erfindungsgemäßen Verfahrens (V1) zur Herstellung der Zusammensetzungen 1 wird als Komponente (D) Füllstoff (D1) eingesetzt.

Bei einer bevorzugten Ausführungsform des erfindungsgemäßen Verfahrens (V1) werden Füllstoffe (D1) mit Amin (K) und den gegebenenfalls eingesetzten Komponenten (F), (G) und (L) vorgemischt und anschließend die Komponenten (A), (B) und (C), sowie die optionalen Komponenten (E), (F), (G), (H), (L) und (M) in beliebiger Reihenfolge zugegeben und vermischt.

Bei einer besonders bevorzugten Ausführungsform des erfindungsgemäßen Verfahrens (V1) werden zunächst die grobkörnigen Füllstoffe (D1) mit Amin (K) und den gegebenenfalls eingesetzten Komponenten (F), (G) und (L) vorgemischt, danach wird dazu ein Gemisch der Komponenten (A), (B) und (C) sowie der optionalen Komponenten (H), (E), (G), (L) und (M) zugegeben und vermischt, anschließend werden dazu feinkörnige Füllstoffe (D1) zugegeben und eingemischt.

In einer bevorzugten Ausführungsform des erfindungsgemäßen Verfahrens (V2) zur Herstellung der Zusammensetzungen 2 wird als Füllstoff (D) Komponente (D2) eingesetzt.

Bei einer bevorzugten Ausführungsform des erfindungsgemäßen Verfahrens (V2) werden zunächst die Komponenten (A), (B), (C) und (K) sowie die optionalen Komponenten (E), (F), (G), (H), (L) und (M) in beliebiger Reihenfolge zu einer Vormischung vermischt, und dann wird Komponente (D2), bevorzugt Gewebe, Gelege, Gestricke oder Geflechte, mit der Vormischung getränkt und gegebenenfalls entgast. Bei mehrlagigen Geweben oder Gelegen (D2) kann jede Schicht einzeln oder alle Schichten gemeinsam getränkt und entgast werden.

Bei einer besonders bevorzugten Ausführungsform des erfindungsgemäßen Verfahrens (V2) werden zunächst die Komponenten (A), (B), (C) und (K) sowie die optionalen Komponenten (E), (F), (G), (H), (L) und (M) in beliebiger Reihenfolge zu einer Vormischung vermischt, und dann in ein Formnest, in welchem sich die Komponente (D2), bevorzugt Gewebe, Gelege, Gestricke oder Geflechte, befindet, injiziert.

Bei einer insbesondere bevorzugten Ausführungsform des erfindungsgemäßen Verfahrens (V2) wird zunächst Komponente (D2), bevorzugt Gewebe, Gelege, Gestricke oder Geflechte, mit Amin (K), gegebenenfalls als Mischung mit Organosiliciumverbindungen (G) und/oder Lösungsmittel (L), vorbehandelt, danach wird ein Gemisch der Komponenten (A), (B) und (C) sowie der optionalen Komponenten (E), (F), (G), (H), (L) und (M) in ein Formnest, in welchem sich die mit (K) vorgehandelte Komponente (D2) befindet, injiziert.

Die erfindungsgemäßen Zusammensetzungen können durch mechanischen Druck bei Temperatur der Umgebung oder gegebenenfalls bei erhöhter Temperatur in beliebige Form gebracht werden.

Die erfindungsgemäßen Zusammensetzungen 1 sind in einer bevorzugten Ausführungsform knetbare, bei Raumtemperatur sehr hochviskose Mischungen von kittähnlicher Konsistenz, die jedoch bei entsprechend hohem mechanischen Druck zum Fließen gebracht werden können.

Die erfindungsgemäßen Zusammensetzungen 1 haben in einer weiteren bevorzugten Ausführungsform die Konsistenz von nassem Sand. Sie sind knetbar, formbar, förderbar, z.B. auf Transportbändern, und haben eine bis zur Weiterverarbeitung ausreichende Lagerfähigkeit.

Die erfindungsgemäßen Zusammensetzungen 2 sind bevorzugt formbar und werden besonders bevorzugt in einem Formnest bzw. um einen Formkörper modeliert und ausgehärtet.

Die erfindungsgemäßen bzw. erfindungsgemäß hergestellten Massen vernetzen durch radikalische Polymerisation sowie gegebenenfalls zusätzlich durch Kondensationsreaktion unter Abspaltung von Alkohol und gegebenenfalls Wasser. Falls die erfindungsgemäße Aushärtung zusätzlich auch durch Kondensationsreaktion erfolgt, reagieren bevorzugt die gegebenenfalls anwesenden Silanol- und/oder Organyloxygruppen von Harz (A) sowie der übrigen Komponenten sowie gegebenenfalls Luftfeuchtigkeit oder Feuchtigkeit, welche den Komponenten anhaften kann, miteinander, mit der Maßgabe, dass der Kondensationsreaktion ein Hydrolyseschritt vorangehen kann.

Die erfindungsgemäßen bzw. erfindungsgemäß hergestellten Mischungen werden bevorzugt vor dem Aushärten entgast, wobei der Entgasungsschritt vorteilhafterweise während der Kompaktierung geschieht, und anschließend besonders bevorzugt mit Inertgas mit einem Sauerstoffgehalt von unter 5 Gew.-%, insbesondere von unter 1 Gew.-%, beaufschlagt.

Die erfindungsgemäße Vernetzung erfolgt bevorzugt bei Temperaturen im Bereich von 50 bis 200°C, besonders bevorzugt von 70 bis 160°C, insbesondere von 80 bis 130°C.

Weiterhin kann die Vernetzung der erfindungsgemäßen Zusammensetzungen bevorzugt durch direkten und/oder indirekten Kontakt mit beheizten Oberflächen oder in beheizter Umluft erfolgen, besonders bevorzugt in der Weise, dass während der Vernetzung der Zutritt von Sauerstoff, z.B. aus der Umgebungsluft, möglichst vermieden wird. Dazu können die erfindungsgemäßen Zusammensetzungen durch direkten Kontakt der Formkörper-Oberfläche mit beheizten Oberflächen, z.B. in geschlossenen Kammern, vernetzen gelassen werden und/oder indem die Formkörperoberflächen mit einer geeigneten luftundurchlässigen Folie abgedeckt werden und/oder indem die erfindungsgemäßen Zusammensetzungen in ein Formnest eingebracht werden und anschließend indirekt, d.h. mitsamt der Folie und/oder dem Formnest, mit beheizten Oberflächen oder heißer Umluft aufgeheizt werden.

Durch Erhöhung der Temperatur kann die Vernetzung beschleunigt werden, so dass die Formgebung und die Vernetzung auch in einem gemeinsamen Schritt durchgeführt werden können.

Die erfindungsgemäße Vernetzung erfolgt bevorzugt beim Druck der umgebenden Atmosphäre, also etwa 900 bis 1100 hPa, sie kann aber auch bei erhöhtem Druck, also von 1200 hPa bis 10 MPa erfolgen.

Die erfindungsgemäßen Zusammensetzungen können für alle Zwecke eingesetzt werden, für die auch bisher Prepolymere eingesetzt worden sind. Die Verarbeitung der erfindungsgemäßen Mischungen erfolgt nach bekannten Verfahren.

Ein weiterer Gegenstand der vorliegenden Erfindung sind Formkörper hergestellt durch Vernetzung der erfindungsgemäßen Zusammensetzungen.

Formkörper können aus den erfindungsgemäßen Mischungen zum Beispiel durch das an sich seit langem bekannte Verfahren des Spritzpressens hergestellt werden. Dazu wird die Mischung mit Hilfe von mechanischem Druck in ein entsprechendes Formnest injiziert. Die Form ist in der Regel zweigeteilt und wird während des Spritzpressvorgangs durch eine hydraulische Presse verschlossen. Die Form ist auf die gewünschte Temperatur vorgeheizt, wodurch einerseits das Fließen der Masse erleichtert wird und andererseits die Aushärtung beschleunigt wird. Nach Ende des Spritzpressvorganges wird die Form noch solange geschlossen gehalten, bis die Formkörper eine Konsistenz erreicht haben, die eine zerstörungsfreie Entnahme der Formkörper gestattet. Formnester für Prüfkörper sind zum Beispiel in DIN EN ISO 10724-1:2002-04 beschrieben.

Die erfindungsgemäßen Formkörper, welche durch Vernetzung der Zusammensetzungen 1 erhalten werden, (Formkörper 1) haben eine Biegefestigkeit von bevorzugt mindestens 20 MPa, besonders bevorzugt von mindestens 25 MPa, insbesondere von mindestens 30 MPa, ganz besonders bevorzugt von mindestens 35 MPa, jeweils bei 23°C. Bevorzugt weisen die erfindungsgemäßen Formkörper 1 mit einem Gewichtsverhältnis von feinkörnigen zu grobkörnigen Füllstoffen von 3:1 bis 1:3 eine Biegefestigkeit bei 23°C von mindestens 30 MPa auf, besonders bevorzugt von mindestens 35 MPa; insbesondere von mindestens 35 MPa auf bei 70°C.

Bei den erfindungsgemäßen Formkörpern 1 handelt es sich bevorzugt um künstliche Steine.

Ein weiterer Gegenstand der vorliegenden Erfindung ist ein Verfahren zur Herstellung von künstlichen Steinen, dadurch gekennzeichnet, dass die erfindungsgemäßen Zusammensetzungen 1 geformt und vernetzen gelassen werden.

Zur Herstellung von künstlichen Steinen werden die erfindungsgemäßen Massen dabei zunächst in eine Form gegeben, wobei zur Vermeidung von Gaseinschlüssen anschließend Unterdruck angelegt wird. Eine Verdichtung kann bereits in diesem Schritt stattfinden, indem bevorzugt die erfindungsgemäße Masse über die Formen in Vibration versetzt wird. Daran schließt sich eine weitere Verdichtung der Masse durch Aufbringen von mechanischem Druck an. Dieser Kompaktierungsprozess, d.h. die Verdichtung gegebenenfalls unter Vibration bei einem Druck von weniger als 50 mPa, dauert bevorzugt 1 bis 3 Minuten. Falls der Formkörper in der Form ausgehärtet wird, dann wird gleichzeitig mit einem der vorangegangenen Schritte oder anschließend die Form für einen Zeitraum von bevorzugt 15 bis 120 Minuten auf Temperaturen oberhalb Raumtemperatur, bevorzugt bei 50 bis 200°C, besonders bevorzugt bei 70 bis 160°C, insbesondere bei 80 bis 130°C, erwärmt. Danach wird der Formkörper der Form entnommen. Alternativ kann, was besonders bevorzugt ist, der noch nicht ausgehärtete Formkörper nach dem Abschluss der Formgebung, d.h. nach dem mechanischen Pressen, der Form entnommen werden und in einem anschließenden separaten Schritt in einem separaten Apparat bei den oben genannten Temperaturen und Zeiten ausgehärtet werden. Danach erfolgt - unabhängig vom Aushärteverfahren - vorteilhafterweise eine weitere Lagerung bei Umgebungstemperatur für eine Dauer von mindestens einer Stunde. Der so erhaltene Formkörper kann dann nach bekannten Verfahren weiterverarbeitet werden, wie z.B. durch Schleifen, Polieren der Oberflächen und Zuschneiden.

Die erfindungsgemäßen künstlichen Steine haben eine Härte von bevorzugt mindestens 75 Shore D, besonders bevorzugt von mindestens 80 Shore D, insbesondere von mindestens 85 Shore D, jeweils bei 23°C.

Bei den erfindungsgemäßen Formkörpern 2 handelt es sich bevorzugt um Faserverbundwerkstoffe.

Ein weiterer Gegenstand der Erfindung ist ein Verfahren zur Herstellung von Faserverbundwerkstoffen, dadurch gekennzeichnet, dass die erfindungsgemäßen Zusammensetzungen 2 geformt und vernetzen gelassen werden.

Die erfindungsgemäßen Zusammensetzungen haben den Vorteil, dass sie lagerstabil sind und eine Konsistenz aufweisen, die sich den Anforderungen entsprechend anpassen lässt.

Die erfindungsgemäßen Zusammensetzungen haben den Vorteil, dass sie aus leicht zugänglichen Rohstoffen und auf einfache Art und Weise hergestellt werden können.

Die erfindungsgemäßen Zusammensetzungen haben des Weiteren den Vorteil, dass sie schnell zu einem festen Verbund aushärten.

Die erfindungsgemäßen Zusammensetzungen haben insbesondere den Vorteil, dass sie in einem Temperaturbereich von 18 bis 25°C, eine gute Verarbeitungszeit von bevorzugt mehr als 30 Minuten, besonders bevorzugt mehr als 45 Minuten, insbesondere mehr als 60 Minuten, aufweisen, aber dennoch bei erhöhter Temperatur, bevorzugt bei 80 bis 130°C, schnell härten und die so erhaltenen Formkörper bereits nach bevorzugt 1 Stunde eine so hohe Härte und Biegefestigkeit aufweisen, dass eine Weiterverarbeitung (Schneiden, Schleifen, Polieren) möglich ist.

Die erfindungsgemäßen Formkörper zeigen bei Einwirkung von UV-Strahlung im Vergleich zu herkömmlichen Formkörpern auf Basis organischer Harze noch keine Farbveränderung (Gelbverfärbung von hellen Farbtönen oder Aufhellung dunkler Farbtöne), wenn bei den herkömmlichen Systemen, zum Beispiel Polyesterharze, welche in Styrol gelöst sind, bereits deutliche Veränderungen sichtbar werden.

Die erfindungsgemäßen Formkörper haben außerdem den Vorteil, dass durch die bessere Benetzung der Füllstoffe eine höhere Bewitterungstabilität erreicht wird.

Die erfindungsgemäßen Formkörper haben den Vorteil, dass sie hitzestabil sind und eine verringerte Brandlast im Vergleich zu Verbundmaterialien mit rein organischen Bindemitteln haben.

Ferner haben die erfindungsgemäßen Zusammensetzungen den Vorteil, dass sie sich hervorragend zur Herstellung von künstlichen Steinen eignen.

Die erfindungsgemäßen Zusammensetzungen haben den Vorteil, dass bei der Verarbeitung keine gesundheitsschädlichen Emissionen in dem Umfang entstehen wie sie üblicherweise bei nach dem Stand der Technik eingesetzten Polyesterharzen, welche in Styrol gelöst sind, auftreten.

Die erfindungsgemäßen Zusammensetzungen haben den Vorteil, dass sich sog. Composite herstellen lassen, welche hohe Biegefestigkeiten und gleichzeitig hohe Härten aufweisen.

Die erfindungsgemäßen Zusammensetzungen haben den Vorteil, dass sich sogenannte Composite herstellen lassen, welche hohe Biegefestigkeiten und gleichzeitig hohe Härten auch bei höheren Temperaturen, wie z.B. von 70°C, aufweisen.

Die erfindungsgemäßen Zusammensetzungen 1 haben den Vorteil, dass geringe Mengen Amin (K) ausreichen um deren Fließfähigkeit signifikant zu erhöhen, d.h. die Viskosität bei niedrigen Scherraten deutlich zu verringern, was sie sehr gut verarbeitbar, z.B. kompaktierbar, macht. Außerdem bewirkt die Zugabe des Amins (K) eine höhere Farbtiefe.

Das erfindungsgemäße Verfahren hat den Vorteil, dass es einfach in der Durchführung ist.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten dynamischen Viskositätsangaben sollen sich auf eine Temperatur von 23°C beziehen.

### Messung der Fließeigenschaften gefüllter Zusammensetzungen

Im Rahmen der vorliegenden Erfindung wird die Viskosität bei niedrigen Scherraten nach folgender Vorgehensweise bei einer Temperatur, sofern nicht anders angegeben, von 23°C und einem Luftdruck von 1013 hPa bestimmt. Für die Messung werden 20 g der Zusammensetzung 1 mittels einer abgesägten 100-ml Plastespritze auf eine Polyethylen-Folie mit hinterlegter Kreisschablone aufgebracht, so dass die Menge einen Durchmesser von 30 mm aufweist. Nach 30 Minuten wird der Durchmesser der Probe erneut ermittelt, indem auf der Kreisschablone von oben auf 1 mm Genauigkeit abgelesen wird. Ein größerer Durchmesser entspricht einer höheren Fließfähigkeit bzw. einer niedrigeren Viskosität der Mischung. Die Ergebnisse der Testungen finden sich in Tabelle 1.

### Messung der Biegefestigkeit

In der vorliegenden Erfindung wurde die Biegefestigkeit nach ISO 178:2011-04 Verfahren A mit einer Prüfgeschwindigkeit von 2 mm/min bei einer Auflagedistanz von 60 mm gemessen. Dabei wurde bevorzugt wie folgt vorgegangen: Es wurden Prüfkörper in den Dimensionen Länge x Breite x Dicke = 80 mm x 10 mm x 4 mm verwendet. Die Messungen wurden an jeweils 5 Prüfkörpern durchgeführt. Die Prüfkörper wurden durch Spritzgießverfahren mit einem Werkzeug mit austauschbaren Formnestplatten entsprechend DIN EN ISO 10724-1:2002-04 wie im Beispiel 1 angegeben hergestellt und unter den im Beispiel 1 angegebenen Bedingungen (Temperatur, Zeit) ausgehärtet. Bei der Prüfung wurden die Probekörper stets so in die Maschine eingelegt, wie sie auch in der Spritzgießform lagen, d.h. mit der Unterseite nach unten. Der in Tabelle 1 angegebene Wert für die Biegefestigkeit in MPa entspricht dem jeweiligen Mittelwert der Einzelmessungen, gerundet auf ganze Zahlen entsprechend DIN 1333:1992-02 Abschnitt 4.

### Messung der Härte Shore-D

Die Härte Shore D wurde nach DIN EN ISO 868:2003-10 bestimmt. Die Messung wurde mit einem Durometer Shore D an Platten-Probekörpern in den Dimensionen Länge x Breite x Dicke = 40 mm x 40 mm x 6 mm durchgeführt, welche durch Spritzgießverfahren mit einem Werkzeug mit austauschbaren Formnestplatten in Anlehnung an DIN EN ISO 10724-1:2002-04 Form 2 wie im Beispiel 1 beschrieben hergestellt und unter den in Beispiel 1 angegebenen Bedingungen (Temperatur, Zeit) ausgehärtet wurden. Es wurde an 3 Prüfkörpern jeweils an der Ober- und Unterseite die Härte Shore D gemessen, sodass insgesamt 6 Messwerte erhalten wurden. Der in Tabelle 1 angegebene Wert entspricht dem Mittelwert aus den Einzelmessungen.

Im Folgenden bedeutet
Me gleich Methylrest, Vi gleich Vinylrest, Et gleich Ethylrest, Ph gleich Phenylrest-, Ma gleich 3-Methacryloxypropylrest und Io gleich 2,4,4-Trimethylpentylrest.

### Harzmischung 1

In einem beheizbaren Glasreaktor mit KPG-Rührer werden 2080 g technisches Methyltrimethoxysilan (käuflich erhältlich unter der Bezeichnung Silan M1-Trimethoxy bei der Wacker Chemie AG, D-München), 568,0 g Vinyltrimethoxysilan (käuflich erhältlich unter der Bezeichnung Silan V-Trimethoxy bei der Wacker Chemie AG, D-München) und 48,0 g Hexamethyldisiloxan (käuflich erhält lich unter der Bezeichnung Öl AK 0,65 bei der Wacker Chemie AG, D-München) auf 50°C erhitzt und im Verlauf von 10 Minuten ein Gemisch aus 520,0 g Wasser und 4,00 g Salzsäure (20 %ig in Was ser, 21,9 mmol Chlorwasserstoff, käuflich erhältlich unter der Bezeichnung Salzsäure 20 % zur Analyse bei der Bernd Kraft GmbH, D-Duisburg) zugegeben und 90 Minuten am Rückfluss ge rührt. Anschließend wird im Verlauf von 2 Minuten mit 4,56 g Natriummethoxidlösung (25 % in Methanol, 21,1 mmol Natriummethy lat, käuflich erhältlich bei der SIGMA-ALDRICH Chemie GmbH, D-Taufkirchen) neutralisiert.

Es werden 176,0 g 2-Hydroxyethylmethacrylat (käuflich erhältlich unter der Bezeichnung Methacrylsäure-2-hydroxyethylester bei der SIGMA-ALDRICH Chemie GmbH, D-Taufkirchen) hinzugefügt, anschließend wird die Mischung bei 100°C und 50 mbar 1 Stunde entflüchtigt. Es werden 1571 g einer Harzmischung erhalten mit einem Organopolysiloxan der Zusammensetzung (MeSiO_{3/2})_{0,49}(ViSiO_{3/2})_{0,13}(Me(MeO)SiO_{2/2})_{0,25}(Vi(MeO)SiO_{2/2})_{0,06} (Me(HO)SiO_{2/2})₀,₀₂(Me₂SiO_{2/2})₀,₀₁(Me(MeO)₂SiO_{1/2})_{0,01}(Me₃SiO_{1/2})_{0,03}, einer Zahlenmittel-Molmasse Mn von 2100 g/mol und einer Gewichtsmittel-Molmasse Mw von 11940 g/mol. Die Mischung wird mit 232 g Butylmethacrylat (käuflich erhältlich unter der Bezeichnung Methacrylsäure-butylester bei der SIGMA-ALDRICH Chemie GmbH, D-Taufkirchen) und 93 g 2-Hydroxyethylmethacrylat (käuflich erhältlich unter der Bezeichnung Methacrylsäure-2-hydroxyethylester bei der SIGMA-ALDRICH Chemie GmbH, D-Taufkirchen) homogen vermischt. Die dynamische Viskosität der so erhaltenen Harzmischung 1 beträgt 230 mPa·s.

### Beispiel 1

Zu 70 g grobkörnigem Quarzgranulat mit einer mittleren Körnung von 0,3 bis 0,9 mm (käuflich erhältlich unter der Bezeichnung SB0,3-0,9T bei Amberger Kaolinwerke Eduard Kick GmbH, D-Hirschau) werden 0,034 g 3-Aminopropyltriethoxysilan (käuflich erhältlich unter der Bezeichnung GENIOSIL® GF93 bei der Wacker Chemie AG, D-München) hinzugefügt und in einem Planeten-Zentrifugalmischer "Thinky Mixer ARV-310" der Firma Thinky 30 Sekunden bei 1500 Umdrehungen/min bei Umgebungsdruck vermischt. Anschließend lässt man das vorbehandelte Granulat auf 23°C abkühlen.

17 g der Harzmischung 1 werden mit 35 g feinkörnigem Quarzmehl mit einem Trockensiebrückstand bei einer Maschenweite von 40 µm von 2 Gew.-% (käuflich erhältlich unter der Bezeichnung Quarzmehl 16.900 bei Amberger Kaolinwerke Eduard Kick GmbH & Co. KG, D-Hirschau) vermengt und im Thinky Mixer ARV-310 30 Sekunden bei 1500 Umdrehungen/min bei Umgebungsdruck vermischt, danach werden der Mischung 70 g des zuvor vorbehandelten grobkörnigen Quarzgranulates zugefügt und im Thinky Mixer ARV-310 30 Sekunden bei 1500 Umdrehungen/min bei Umgebungsdruck vermischt wobei sich die Mischung auf 40°C erwärmt. Anschließend werden 0,1 g tert-Butylperoxybenzoat (käuflich erhältlich unter der Bezeichnung LUPEROX® P bei der SIGMA-ALDRICH Chemie GmbH, D-Taufkirchen) im Thinky Mixer ARV-310 30 Sekunden bei 1500 Umdrehungen/min bei Umgebungsdruck eingemischt, die Mischung wird dann kurz von Hand mit einem Spatel umgerührt und anschließend nochmal im Thinky Mixer ARV-310 30 Sekunden bei 1500 Umdrehungen/min bei Umgebungsdruck gemischt. Die so erhaltene Mischung 1 wird vor der Bestimmung des Fließverhaltens 30 Minuten bei 23°C stehen gelassen und vor der Bestimmung der mechanischen Eigenschaften 90 Sekunden bei 850 Umdrehungen/min und 10 mbar im Thinky Mixer ARV-310 gemischt.

Zur Herstellung der Prüfkörper für die mechanischen Messungen wird eine ölhydraulische Presse vom Typ VSKO 75 der Firma Lauffer GmbH & Co. KG benutzt. Die Presse ist mit einem Werkzeug mit austauschbaren Formnestplatten nach DIN EN ISO 10724-1:2002-04 ausgerüstet, womit sich Prüfkörper in den Dimensionen Länge x Breite x Dicke = 80 mm x 10 mm x 4 mm (zur Testung der Biegefestigkeit) bzw. Länge x Breite x Dicke = 40 mm x 40 mm x 6 mm (zur Testung der Härte) herstellen lassen. Die Form wird hydraulisch geschlossen mit einer Schließkraft von 140 kN. Die Form hat die Außenabmessungen Länge x Breite = 450 mm x 450 mm. Der Pressstempel hat einen Durchmesser von 50 mm. Zum Herstellen der Prüfkörper werden 100 g der oben beschriebenen Mischung eingefüllt und mit einer Presskraft von 5 kN in das jeweilige Formnest, welches auf eine Temperatur von 120°C vorgeheizt ist, eingespritzt. Nachdem die Formnester vollständig ausgefüllt sind, steigt die Presskraft auf 25 kN an. An diesem Punkt wird die Hydraulik abgeschaltet. Während der Aushärtung lässt die Kraft langsam nach und beträgt am Ende des gesamten Press- und Aushärtevorgangs 14 kN. Nach 30 Minuten bei 120°C wird das Werkzeug geöffnet und die Prüfkörper entnommen.

Die so erhaltenen Prüfkörper werden 24 h bei 23°C und 50% rel. Luftfeuchtigkeit gelagert und anschließend hinsichtlich ihrer mechanischen Eigenschaften bei den in Tabelle 1 genannten Temperaturen überprüft. Die Ergebnisse finden sich in Tabelle 1.

### Beispiel 2

Die in Beispiel 1 beschriebene Verfahrensweise wird wiederholt mit der Abänderung, dass nicht das grobkörnige Quarzgranulat mit 3-Aminopropyltrimethoxysilan vorbehandelt wird, sondern dass 3-Aminopropyltrimethoxysilan mit Harzmischung 1 in einem Thinky Mixer ARV-310 15 Sekunden bei 1500 Umdrehungen/min bei Umgebungsdruck vorgemischt wird. Anschließend werden wie in Beispiel 1 beschrieben das feinkörnige Quarzmehl, das nicht vorbehandelte grobkörnige Quarzgranulat sowie tert-Butylperoxybenzoat nacheinander eingemischt.

Die Ergebnisse finden sich in Tabelle 1.

### Beispiel 3

Die in Beispiel 1 beschriebene Verfahrensweise wird wiederholt mit der Abänderung, dass anstelle von 3-Aminopropyltrimethoxysilan N-(2-Aminoethyl)-3-aminopropyl-trimethoxysilan (käuflich erhältlich unter der Bezeichnung GENIOSIL® GF91 bei der Wacker Chemie AG, D-München) eingesetzt wird.

Die Ergebnisse finden sich in Tabelle 1.

### Beispiel 4

Die in Beispiel 1 beschriebene Verfahrensweise wird wiederholt mit der Abänderung, dass anstelle von 3-Aminopropyltrimethoxysilan 2-(Dimethylamino)ethylmethacrylat (CAS: 2867-47-2) (käuflich erhältlich bei der SIGMA-ALDRICH Chemie GmbH, D-Taufkirchen) eingesetzt wird.

Die Ergebnisse finden sich in Tabelle 1.

### Beispiel 5

Die in Beispiel 1 beschriebene Verfahrensweise wird wiederholt mit der Abänderung, dass anstelle von 3-Aminopropyltrimethoxysilan Triethanolamin (käuflich erhältlich bei der SIGMA-ALDRICH Chemie GmbH, D-Taufkirchen), eingesetzt wird.

Die Ergebnisse finden sich in Tabelle 1.

### Beispiel 6

Die in Beispiel 1 beschriebene Verfahrensweise wird wiederholt mit der Abänderung, dass anstelle von 3-Aminopropyltrimethoxysilan ein aminhaltiges Siliconöl (käuflich erhältlich unter der Bezeichnung WACKER® FLUID NH 15 D bei der Wacker Chemie AG, D-München) eingesetzt wird.

Die Ergebnisse finden sich in Tabelle 1.

### Vergleichsbeispiel V1

Die in Beispiel 1 beschriebene Verfahrensweise wird wiederholt mit der Abänderung, dass anstelle von 3-Aminopropyltrimethoxysilan Methyltrimethoxysilan eingesetzt wird.

Die Ergebnisse finden sich in Tabelle 1.

### Vergleichsbeispiel V2

Die in Beispiel 1 beschriebene Verfahrensweise wird wiederholt mit der Abänderung, dass anstelle von 3-Aminopropyltrimethoxysilan ein aminfreies Siliconöl (käuflich erhältlich unter der Bezeichnung WACKER® WEICHMACHER X 345 bei der Wacker Chemie AG, D-München) eingesetzt wird.

Die Ergebnisse finden sich in Tabelle 1.

### Vergleichsbeispiel V3

Die in Beispiel 1 beschriebene Verfahrensweise wird wiederholt mit der Abänderung, dass anstelle von 3-Aminopropyltrimethoxysilan ein aminfreies Methylsiloxan (käuflich erhältlich unter der Bezeichnung SILRES® MSE 100 bei der Wacker Chemie AG, D-München) eingesetzt wird.

Die Ergebnisse finden sich in Tabelle 1.

### Vergleichsbeispiel V4

Die in Beispiel 1 beschriebene Verfahrensweise wird wiederholt mit der Abänderung, dass kein 3-Aminopropyltrimethoxysilan eingesetzt wird.

Die Ergebnisse finden sich in Tabelle 1.

**Tabelle 1**

| **Beispiel** | **1** | **2** | **3** | **4** | **5** | **6** |
|---|---|---|---|---|---|---|
| Durchmesser [mm] | 41 | 42 | 48 | 39 | 39 | 39 |
| Härte (Shore D) bei 23°C | 89 | 88 | 88 | 90 | 87 | 86 |
| Biegefestigkeit [MPa] bei 23°C | 49 | 50 | 47 | 53 | 46 | 45 |
| | | | | | | |

| **Vergleichsbeispiel** | **V1** | **V2** | **V3** | **V4** | | |
|---|---|---|---|---|---|---|
| Durchmesser [mm] | 34 | 32 | 30 | 33 | | |
| Härte (Shore D) bei 23°C | 90 | 86 | 89 | 89 | | |
| Biegefestigkeit [MPa] bei 23°C | 49 | 48 | 49 | 49 | | |

## Patentansprüche

1. Zusammensetzungen enthaltend
(A) Organopolysiloxanharze bestehend aus Einheiten der allgemeinen Formel
RₐR¹_{b}(OR²)_{c}SiO_{(4-a-b-c)/2} (I),
wobei
R gleich oder verschieden sein kann und Wasserstoffatom oder einwertige, SiC-gebundene, gegebenenfalls substituierte, von aliphatischen Kohlenstoff-Kohlenstoff-Mehrfachbindungen freie Kohlenwasserstoffreste, darstellt,
R¹ gleich oder verschieden sein kann und einwertige, SiC-gebundene, gegebenenfalls substituierte Kohlenwasserstoffreste mit aliphatischen Kohlenstoff-Kohlenstoff-Mehrfachbindungen, bedeutet,
R² gleich oder verschieden sein kann und Wasserstoffatom oder einwertige, gegebenenfalls substituierte Kohlenwasserstoffreste, bedeutet,
a 0, 1, 2 oder 3 ist,
b 0 oder 1 ist und
c 0, 1, 2 oder 3 ist,
mit der Maßgabe dass in Formel (I) die Summe a+b+c≤3 ist, in mindestens einer Einheit der Formel (I) b=1 ist, in mindestens 50% der Einheiten der Formel (I) a+b=1 ist sowie in höchstens 10% der Einheiten der Formel (I) a+b=3 ist, jeweils bezogen auf alle Siloxaneinheiten der Formel (I) in Organopolysiloxanharz (A),
(B) organische Verbindungen mit mindestens einer Einheit der Formel
CR³₂=CR³-CO-Z- (II),
wobei
R³ gleich oder verschieden sein kann und Wasserstoffatom, Cyanorest -CN oder einen einwertigen, gegebenenfalls substituierten Kohlenwasserstoffrest, der durch Heteroatome unterbrochen sein kann, bedeutet,
Z gleich oder verschieden sein kann und -O- oder -NR⁵- bedeutet und
R⁵ gleich oder verschieden sein kann und Wasserstoffatom oder einen einwertigen, gegebenenfalls substituierten Kohlenwasserstoffrest, der durch Heteroatome unterbrochen sein kann, bedeutet
(C) Initiatoren,
(D) Füllstoffe und
(K) Amine.

2. Zusammensetzungen gemäß Anspruch 1, **dadurch gekennzeichnet, dass** in Organopolysiloxanharz (A) die Summe der Einheiten der Formel (I) mit R¹ = Vinylrest mindestens 80%, bezogen auf alle Einheiten der Formel (I) mit b=1, beträgt.

3. Zusammensetzungen gemäß Anspruch 1 oder 2, **dadurch gekennzeichnet, dass** sie Komponente (B) in Mengen von 1 bis 250 Gewichtsteilen, bezogen auf 100 Gewichtsteile der Komponente (A), enthalten.

4. Zusammensetzungen gemäß einem oder mehreren der Ansprüche 1 bis 3, **dadurch gekennzeichnet, dass** in Harz (A) die Summe der Einheiten der Formel (I) mit b=1 10% bis 40% beträgt.

5. Zusammensetzungen gemäß einem oder mehreren der Ansprüche 1 bis 4, **dadurch gekennzeichnet, dass** es sich bei Komponente (D) um solche, ausgewählt aus teilchenförmigen Füllstoffen inklusive Fasern bis zu einer Länge von 5 cm (D1) und Faserhalbzeug enthaltend Fasern mit einer Länge von über 5 cm (D2) handelt.

6. Zusammensetzungen gemäß Anspruch 5, **dadurch gekennzeichnet, dass** als Komponente (D1) Mischungen enthaltend feinkörnige und grobkörnige Füllstoffe eingesetzt werden.

7. Zusammensetzungen gemäß Anspruch 5, **dadurch gekennzeichnet, dass** als Komponente (D2) Gewebe, Gelege, Gestricke, Geflechte, Matten oder Vliesstoffe eingesetzt werden.

8. Zusammensetzungen gemäß einem oder mehreren der Ansprüche 1 bis 7, **dadurch gekennzeichnet, dass** sie Komponente (K) in Mengen von 0,001 bis 5 Gewichtsteilen, bezogen auf 100 Gewichtsteile des Gesamtgewichts der Komponenten (A) und (B), enthalten.

9. Verfahren zur Herstellung der Zusammensetzungen gemäß einem oder mehreren der Ansprüche 1 bis 8 durch Mischen der einzelnen Komponenten in beliebiger Reihenfolge.

10. Formkörper hergestellt durch Vernetzung der Zusammensetzungen gemäß einem oder mehreren der Ansprüche 1 bis 8 oder hergestellt nach Anspruch 9.

11. Verfahren zur Herstellung von künstlichen Steinen, **dadurch gekennzeichnet, dass** die Zusammensetzungen gemäß Anspruch 6 geformt und vernetzen gelassen werden.

12. Verfahren zur Herstellung von Faserverbundwerkstoffen, **dadurch gekennzeichnet, dass** die Zusammensetzungen gemäß Anspruch 7 geformt und vernetzen gelassen werden.

## Claims

1. Compositions comprising
(A) organopolysiloxane resins consisting of units of the general formula
RₐR¹_{b}(OR²)_{c}SiO_{(4-a-b-c)/2} (I),
wherein
R may be the same or different and is a hydrogen atom or monovalent, SiC-bonded, optionally substituted hydrocarbon radicals free of aliphatic carbon-carbon multiple bonds,
R¹ may be the same or different and is monovalent, SiC-bonded, optionally substituted hydrocarbon radicals having aliphatic carbon-carbon multiple bonds,
R² may be the same or different and is a hydrogen atom or monovalent, optionally substituted hydrocarbon radicals,
a is 0, 1, 2 or 3,
b is 0 or 1 and
c is 0, 1, 2 or 3,
with the proviso that in formula (I) the sum of a+b+c <3, in at least one unit of the formula (I) b=1, in at least 50% of the units of the formula (I) a+b=1 and in at most 10% of the units of the formula (I) a+b=3, based in each case on all siloxane units of the formula (I) in organopolysiloxane resin (A),
(B) organic compounds having at least one unit of the formula
CR³₂=CR³-CO-Z- (II),
wherein
R³ may be the same or different and is a hydrogen atom, cyano radical -CN or a monovalent, optionally substituted hydrocarbon radical, which may be interrupted by heteroatoms,
Z may be the same or different and is -O- or -NR⁵-
and
R⁵ may be the same or different and is a hydrogen atom or a monovalent, optionally substituted hydrocarbon radical, which may be interrupted by heteroatoms
(C) initiators,
(D) fillers and
(K) amines.

2. Compositions according to Claim 1, **characterized in that** in organopolysiloxane resin (A) the sum of the units of the formula (I) where R¹ = vinyl radical is at least 80%, based on all units of the formula (I) where b=1.

3. Compositions according to Claim 1 or 2, **characterized in that** said compositions comprise component (B) in amounts of from 1 to 250 parts by weight, based on 100 parts by weight of component (A).

4. Compositions according to one or more of Claims 1 to 3, **characterized in that** in resin (A) the sum of the units of the formula (I) where b=1 is 10% to 40%.

5. Compositions according to one or more of Claims 1 to 4, **characterized in that** component (D) comprises a component selected from particulate fillers, including fibers up to a length of 5 cm (D1) and semi-finished fiber product comprising fibers with a length of over 5 cm (D2).

6. Compositions according to Claim 5, **characterized in that** mixtures comprising fine-grained and coarse-grained fillers are used as component (D1).

7. Compositions according to Claim 5, **characterized in that** wovens, laid scrims, knits, braids, mats or nonwovens are used as component (D2).

8. Compositions according to one or more of Claims 1 to 7, **characterized in that** said compositions comprise component (K) in amounts of from 0.001 to 5 parts by weight, based on 100 parts by weight of the total weight of components (A) and (B).

9. Process for producing compositions according to one or more of Claims 1 to 8 by mixing the individual components in any sequence.

10. Molding produced by crosslinking the compositions according to one or more of Claims 1 to 8 or produced according to Claim 9.

11. Process for producing artificial stones, **characterized in that** the compositions according to Claim 6 are molded and allowed to crosslink.

12. Process for producing fiber composites, **characterized in that** the compositions according to Claim 7 are molded and allowed to crosslink.

## Revendications

1. Compositions contenant
(A) des résines d'organopolysiloxane constituées par des unités de formule générale
RₐR¹_{b}(OR²)_{c}SiO_{(4-a-b-c)/2} (I),
dans laquelle
R peut être identique ou différent et représente un atome d'hydrogène ou des radicaux hydrocarbonés monovalents, liés par SiC, le cas échéant substitués, exempts de liaisons carbone-carbone multiples aliphatiques,
R¹ peut être identique ou différent et signifie des radicaux hydrocarbonés monovalents, liés par SiC, le cas échéant substitués, présentant des liaisons carbone-carbone multiples aliphatiques,
R² peut être identique ou différent et signifie un atome d'hydrogène ou des radicaux hydrocarbonés monovalents, le cas échéant substitués,
a vaut 0, 1, 2 ou 3,
b vaut 0 ou 1 et
c vaut 0, 1, 2 ou 3,
à condition que dans la formule (I), la somme a + b + c ≤ 3, dans au moins une unité de formule (I) b = 1, dans au moins 50% des unités de formule (I) a + b = 1 et dans au plus 10% des unités de formule (I) a + b = 3, à chaque fois par rapport à toutes les unités siloxane de la formule (I) dans la résine d'organopolysiloxane (A),
(B) des composés organiques présentant au moins une unité de formule
CR³₂=CR³-CO-Z- (II),
dans laquelle
R³ peut être identique ou différent et signifie un atome d'hydrogène, un radical cyano -CN ou un radical hydrocarboné monovalent, le cas échéant substitué, qui peut être interrompu par des hétéroatomes,
Z peut être identique ou différent et signifie-O- ou -NR⁵- et
R⁵ peut être identique ou différent et représente un atome d'hydrogène ou un radical hydrocarboné monovalent, le cas échéant substitué, qui peut être interrompu par des hétéroatomes,
(C) des initiateurs,
(D) des charges et
(K) des aminés.

2. Compositions selon la revendication 1, **caractérisées en ce que**, dans la résine d'organopolysiloxane (A), la somme des unités de formule (I) dans laquelle R¹ = radical vinyle représente au moins 80% par rapport à toutes les unités de formule (I) dans laquelle b = 1.

3. Compositions selon la revendication 1 ou 2, **caractérisées en ce qu'**elles contiennent le composant (B) en des quantités de 1 à 250 parties en poids, par rapport à 100 parties en poids de composant (A).

4. Compositions selon l'une ou plusieurs des revendications 1 à 3, **caractérisées en ce que**, dans la résine (A), la somme des unités de formule (I) dans laquelle b = 1 représente 10% à 40%.

5. Compositions selon l'une ou plusieurs des revendications 1 à 4, **caractérisées en ce qu'**il s'agit, pour le composant (D), de composés choisis parmi les charges particulaires, y compris les fibres jusqu'à une longueur de 5 cm (D1), et un semi-produit fibreux contenant des fibres présentant une longueur supérieure à 5 cm (D2) .

6. Compositions selon la revendication 5, **caractérisées en ce qu'**on utilise, comme composant (D1), des mélanges contenant des charges à grains fins et à gros grains.

7. Compositions selon la revendication 5, **caractérisées en ce qu'**on utilise, comme composant (D2), des tissus, des nappes, des tricots, des treillis, des nattes et/ou des non-tissés.

8. Compositions selon l'une ou plusieurs des revendications 1 à 7, **caractérisées en ce qu'**elles contiennent le composant (K) en des quantités de 0,001 à 5 parties en poids, par rapport à 100 parties en poids du poids total des composants (A) et (B).

9. Procédé pour la préparation des compositions selon l'une ou plusieurs des revendications 1 à 8 par mélange des différents composants dans un ordre quelconque.

10. Corps façonnés, fabriqués par réticulation des compositions selon l'une ou plusieurs des revendications 1 à 8 ou fabriqués selon la revendication 9.

11. Procédé pour la fabrication de pierres artificielles, **caractérisé en ce que** les compositions selon la revendication 6 sont façonnées et laissées à réticuler.

12. Procédé pour la fabrication de matériaux composites fibreux, **caractérisé en ce que** les compositions selon la revendication 7 sont façonnées et laissées à réticuler.
